(19) **Europäisches Patentamt / European Patent Office / Office européen des brevets**

(11) **EP 4 561 190 A1**

(12) **EUROPEAN PATENT APPLICATION**
published in accordance with Art. 153(4) EPC

(43) Date of publication:
**28.05.2025 Bulletin 2025/22**

(21) Application number: **23851626.4**

(22) Date of filing: **31.07.2023**

(51) International Patent Classification (IPC):
**H04W 52/02** (2009.01)

(52) Cooperative Patent Classification (CPC):
**H04W 52/02; H04W 68/00; H04W 76/27**

(86) International application number:
**PCT/CN2023/110144**

(87) International publication number:
**WO 2024/032405 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 CN 202210957685**

(71) Applicant: **Huawei Technologies Co., Ltd.**
**Shenzhen, Guangdong 518129 (CN)**

(72) Inventors:
• **CHEN, Xiaohua**
**Shenzhen, Guangdong 518129 (CN)**
• **XIE, Xi**
**Shenzhen, Guangdong 518129 (CN)**
• **YIN, Peng**
**Shenzhen, Guangdong 518129 (CN)**
• **YAO, Qinbo**
**Shenzhen, Guangdong 518129 (CN)**
• **LIU, Yuanyuan**
**Shenzhen, Guangdong 518129 (CN)**
• **CHEN, Hongqiang**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND COMMUNICATION APPARATUS**

(57) This application provides a communication method and a communication apparatus, to avoid a paging error caused by an incorrect update of a terminal device, enhance a paging early indication (paging early indication, PEI) function implemented by the terminal device based on first information, and reduce power consumption of the terminal device. In the method, when the terminal device receives a first message and access stratum (access stratum, AS) security between the terminal device and the network device is not activated, the terminal device determines not to update the first information, where the first information indicates a last used cell of the terminal device, and the first message indicates to release a radio resource control (radio resource control, RRC) connection between the terminal device and the network device. The terminal device releases the RRC connection.

FIG. 4

## Description

This application claims priority to Chinese Patent Application No. 202210957685.3, filed with the China National Intellectual Property Administration on August 10, 2022 and entitled "COMMUNICATION METHOD AND COMMUNICATION APPARATUS", which is incorporated herein by reference in its entirety.

## TECHNICAL FIELD

This application relates to the communication field, and in particular, to a communication method and a communication apparatus.

## BACKGROUND

In a communication system, when a plurality of terminal devices monitor a same paging occasion (paging occasion, PO), if paging is performed only for some of the plurality of terminal devices, for a terminal device that is not paged, unnecessary paging reception exists, resulting in unnecessary power consumption. This case is referred to as a paging false alarm (false alarm).

Currently, a paging early indication (paging early indication, PEI) mechanism may be introduced to a network device and the terminal device, to reduce occurrence of the paging false alarm. The network device may divide the plurality of terminal devices on the same PO into a plurality of groups, and indicate, based on the PEI mechanism, that terminal devices in some groups specified in the plurality of groups need to monitor a paging message on the PO.

In addition, in an implementation process of the PEI mechanism, the terminal device needs to receive a broadcast message of a camped cell, and determine, based on a last used cell (last used cell) of the terminal device, whether the PEI mechanism is allowed to be used in the camped cell, to reduce unnecessary power consumption.

However, for the terminal device, how to determine the last used cell of the terminal device is an urgent technical problem to be resolved.

## SUMMARY

This application provides a communication method and a communication apparatus, to avoid a paging error caused by an incorrect update of a terminal device, enhance a PEI function implemented by the terminal device based on first information, and reduce power consumption of the terminal device.

A first aspect of this application provides a communication method. The method is performed by a terminal device, or the method is performed by a part of components (for example, a processor, a chip, or a chip system) in the terminal device, or the method may be implemented by a logic module or software that can implement all or some functions of the terminal device. In the first aspect and possible implementations of the first aspect, an example in which the communication method is performed by the terminal device is used for description. In the method, when the terminal device receives a first message and access stratum (access stratum, AS) security between the terminal device and a network device is not activated, the terminal device determines not to update first information, where the first information indicates a last used cell of the terminal device, and the first message indicates to release a radio resource control (radio resource control, RRC) connection between the terminal device and the network device. The terminal device releases the RRC connection.

Based on the foregoing technical solution, the terminal device may maintain the first information indicating the last used cell of the terminal device. In a scenario in which the terminal device receives the first message indicating to release the RRC connection between the terminal device and the network device and releases the RRC connection, when the access stratum security between the terminal device and the network device is not activated, the terminal device determines not to update the first information. When the access stratum security is not activated, the terminal device may determine that the terminal device cannot communicate with the network device based on an access stratum security mechanism. Therefore, in a manner in which the terminal device determines not to update the first information, the terminal device does not update the first information based on a cell (the cell is located in one or more cells corresponding to the network device) through which the first message is sent, so that a paging error caused by an incorrect update of the terminal device can be avoided, to enhance a PEI function implemented by the terminal device based on the first information and reduce power consumption of the terminal device.

In addition, when the access stratum security between the terminal device and the network device is not activated, a connection between different network devices (an access network device and a core network device) may not be successfully established. In this case, the network device cannot update information that is about the last used cell of the terminal device and that is maintained by the network device. In view of this, in the foregoing technical solution, the terminal device determines not to update the first information, so that the terminal device and the network device maintain information about the last used cell of the terminal device in a consistent manner (or referred to as an aligned manner). In this case, the terminal device and the network device can normally communicate with each other by using the PEI mechanism.

In addition, when the access stratum security between the terminal device and the network device is not activated, the network device may be an abnormal network device (for example, a pseudo base station). In view of this, in the foregoing technical solution, the terminal device determines not to update the first information, so that the terminal device can be prevented from incorrectly updating the last used cell as an incorrect cell. In this case, the terminal device and the network device can normally communicate with each other by using the PEI mechanism.

It should be understood that, that the terminal device releases the RRC connection may be understood as that the terminal device exits an RRC connected mode, and the terminal device may enter a state other than the RRC connected mode, for example, an idle state (idle state) or an inactive state (inactive state).

In this application, a message name of the first message indicating to release the RRC connection between the terminal device and the network device may be an RRCRelease (RRCRelease) message, and the name is a name in a current communication system. In a future communication system, a name of the message indicating to release the RRC connection between the terminal device and the network device may change with evolution of the communication system.

In addition, in this application, the last used cell (last used cell) of the terminal device may be referred to as a recently accessed cell of the terminal device, a cell recently accessed by the terminal device, a cell through which a connection of the terminal device is released, a cell through which the first message is sent to the terminal device, a cell last served by the terminal device, or the like.

Optionally, that the terminal device determines not to update the first information may be expressed as that the terminal device does not update the first information, or may be expressed as that the terminal device determines not to update the first information, without identifying whether the first message carries indication information indicating to update (or not to update) the first information, or may be expressed as that the terminal device does not perform an update of the first information, or may be expressed as that the terminal device keeps the first information unchanged, or may be expressed as that the first information maintained by the terminal device remains unchanged.

In a possible implementation of the first aspect, the first message includes first indication information, and the first indication information indicates not to update the first information; and the method further includes: When the access stratum security between the terminal device and the network device is not activated, the terminal device ignores the first indication information.

Based on the foregoing technical solution, when the access stratum security between the terminal device and the network device is not activated, the terminal device may determine that the terminal device cannot communicate with the network device based on the access stratum security mechanism. In view of this, the terminal device may ignore the first indication information carried in the first message and determine not to update the first information. In other words, the terminal device may determine not to update the first information, without identifying whether the first message carries indication information indicating to update (or not to update) the first information, so as to avoid a paging error caused by an incorrect update of the terminal device.

In this application, a name of the first indication information may be a noLastCellUpdate (noLastCellUpdate) information element/field/domain/parameter. The name is a name in a current communication system. In a future communication system, a name of the first indication information may change with evolution of the communication system.

In a possible implementation of the first aspect, the first message includes second indication information, and the second indication information indicates wait time (wait time) for accessing a network; and the method further includes: The terminal device ignores at least one piece of information in the first message except the second indication information, where the at least one piece of information includes the first indication information, and the first indication information indicates not to update the first information.

Based on the foregoing technical solution, the first message received by the terminal device may include the second indication information indicating the wait time for accessing the network, so that the terminal device can subsequently re-establish the connection to the network device based on the second indication information. In addition, when the access stratum security between the terminal device and the network device is not activated, the terminal device may determine that the terminal device cannot communicate with the network device based on the access stratum security mechanism. Therefore, the terminal device may ignore the at least one piece of information in the first message except the second indication information.

Optionally, that the terminal device ignores at least one piece of information in the first message except the second indication information may include: The terminal device ignores information in the first message except the second indication information.

Optionally, the second indication information may alternatively be expressed in another manner, including: The second indication information indicates timing duration of a timer T302 (where T302 indicates wait time for re-establishing or resuming the RRC connection by the terminal device), the second indication information indicates wait time of an access attempt (access attempt) of the terminal device, and the second indication information indicates wait time for controlling the terminal device to establish the RRC connection, and the like.

In this application, a name of the second indication information may be a wait time (waitTime) information element/field/domain/parameter. The name is a name in a current communication system. In a future communication system, a name of the second indication information may change with evolution of the communication system.

In a possible implementation of the first aspect, the first information includes information about the last used cell of the terminal device.

Optionally, the first information may include an identifier of the last used cell of the terminal device. For example, the identifier may be a cell global identifier (cell global identifier, CGI) or a physical cell identifier (physical cell identifier, PCI).

In a possible implementation of the first aspect, when any one of the following is met, that the terminal device determines that access stratum security between the terminal device and the network device is not activated includes: The terminal device determines that no security mode command message is received; and after the terminal device receives the security mode command message, the terminal device determines that a process of deriving a key based on the security mode command message fails; or after the terminal device receives the security mode command message, the terminal device determines that integrity protection verification corresponding to the security mode command message fails.

Based on the foregoing technical solution, the terminal device may determine, in the foregoing plurality of manners, that the access stratum security between the terminal device and the network device is not activated, to improve flexibility of implementing the solution.

In a possible implementation of the first aspect, the method further includes: The terminal device sends first capability information, where the first capability information indicates that the terminal device supports a PEI.

Based on the foregoing technical solution, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation of the first aspect, the method further includes: The terminal device receives third indication information, where the third indication information indicates that the network device supports the PEI.

Based on the foregoing technical solution, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

A second aspect of this application provides a communication method. The method is performed by a network device, or the method is performed by a part of components (for example, a processor, a chip, or a chip system) in the network device, or the method may be implemented by a logic module or software that can implement all or some functions of the network device. In the second aspect and the possible implementations of the second aspect, an example in which the communication method is performed by the network device is used for description. In the method, when the network device has sent a first message and access stratum security between a terminal device and the network device is not activated, the network device determines not to update second information, where the second information indicates one or more cells that have been accessed by the terminal device, and the first message indicates to release a radio resource control RRC connection between the terminal device and the network device. The network device releases the RRC connection.

Based on the foregoing technical solution, the network device may maintain the second information indicating the one or more cells that have been accessed by the terminal device. In a scenario in which the network device sends the first message indicating to release the RRC connection between the terminal device and the network device and releases the RRC connection, when the access stratum security between the terminal device and the network device is not activated, the network device determines not to update the second information. When the access stratum security is not activated, the network device may determine that the network device cannot communicate with the terminal device based on an access stratum security mechanism. Therefore, in a manner in which the network device determines not to update the second information, the network device does not update the second information based on a cell (where the cell is located in one or more cells corresponding to the network device) through which the first message is sent, so that a paging error caused by an incorrect update of the network device can be avoided, to enhance a PEI function implemented by the network device based on the second information and reduce power consumption of the network device.

In addition, when the access stratum security between the terminal device and the network device is not activated, a connection between different network devices (an access network device and a core network device) may not be successfully established. In this case, the network device cannot update information that is about the last used cell of the terminal device and that is maintained by the network device. **In** view of this, in the foregoing technical solution, the network device determines not to update the second information, so that the terminal device and the network device maintain information about the last used cell of the terminal device in a consistent manner (or referred to as an aligned manner). **In** this case, the terminal device and the network device can normally communicate with each other by using the **PEI** mechanism.

**In** addition, when the access stratum security between the terminal device and the network device is not activated, the network device may be an abnormal network device (for example, a pseudo base station). Therefore, in the foregoing technical solution, the network device determines not to update the second information, so that the network device can be prevented from incorrectly updating the last used cell as an incorrect cell. **In** this case, the terminal device and the network device can normally communicate with each other by using the **PEI** mechanism.

Optionally, that the network device determines not to update the second information may be expressed as that the network device does not update the second information, or may be expressed as that the network device determines not to update the second information, without identifying whether the first message carries indication information indicating to update (or not to update) the first information, or may be expressed as that the network device does not perform an update of the second information, or may be expressed as that the network device keeps the second information unchanged, or may be expressed as that the second information maintained by the network device remains unchanged.

It should be understood that, in this application, the second information indicates one or more cells that have been accessed by the terminal device, and the second information may further indicate other information, for example, one or more cells that have not been accessed by the terminal device, or other information. This is not limited herein.

In a possible implementation of the second aspect, the first message includes first indication information, the first indication information indicates not to update the first information, and the first information indicates a last used cell of the terminal device; and the method further includes: When the access stratum security between the terminal device and the network device is not activated, the network device determines that the terminal device ignores the first indication information.

Based on the foregoing technical solution, when the access stratum security between the terminal device and the network device is not activated, the network device may determine that the network device cannot communicate with the terminal device based on an access stratum security mechanism. In view of this, the network device determines that the terminal device ignores the first indication information, so that the network device and the terminal device are aligned in understandings on the first information, to reduce a possibility of a communication error.

In a possible implementation of the second aspect, the first message includes second indication information, and the second indication information indicates wait time for accessing a network. The method further includes: When the access stratum security between the terminal device and the network device is not activated, the network device determines that the terminal device ignores at least one piece of information in the first message except the second indication information, where the at least one piece of information includes first indication information, the first indication information indicates not to update the first information, and the first information indicates the last used cell of the terminal device.

Based on the foregoing technical solution, the first message sent by the network device may include the second indication information indicating the wait time for accessing the network, so that the terminal device can subsequently re-establish the connection to the network device based on the second indication information. In addition, when the access stratum security between the terminal device and the network device is not activated, the network device may determine that the network device cannot communicate with the terminal device based on an access stratum security mechanism. In view of this, the network device may determine that the terminal device ignores the at least one piece of information in the first message except the second indication information, so that the network device and the terminal device are aligned in understandings on the first message, to reduce a possibility of a communication error.

Optionally, the second indication information may alternatively be expressed in another manner, including: The second indication information indicates timing duration of a timer T302 (where T302 indicates wait time for re-establishing or resuming the RRC connection by the terminal device), the second indication information indicates wait time of an access attempt (access attempt) of the terminal device, and the second indication information indicates wait time for controlling the terminal device to establish the RRC connection, and the like.

In a possible implementation of the second aspect, the method further includes: When the access stratum security between the terminal device and the network device is not activated, the network device determines that the terminal device does not update the first information, where the first information indicates the last used cell of the terminal device.

Based on the foregoing technical solution, when the access stratum security between the terminal device and the network device is not activated, the network device may determine that the network device cannot communicate with the terminal device based on an access stratum security mechanism. In view of this, the network device determines that the terminal device does not update the first information, so that the network device and the terminal device are aligned in understandings on the first information, to reduce a possibility of a communication error.

In a possible implementation of the second aspect, the first information includes information about the last used cell of the terminal device.

Optionally, the first information may include an identifier of the last used cell of the terminal device. For example, the identifier may be a CGI, a PCI, or the like.

In a possible implementation of the second aspect, the second information includes identifiers of the one or more cells that have been accessed by the terminal device.

Optionally, the identifiers of the one or more cells accessed by the terminal device may be a CGI, a PCI, or the like.

In a possible implementation of the second aspect, the network device sends the second information to a core network device.

Based on the foregoing technical solution, the network device may further send, to the core network device, the second information indicating the one or more cells that have been accessed by the terminal device, so that the core network device and the network device are aligned in understandings on the second information, to reduce a possibility of a communication error.

In a possible implementation of the second aspect, the method further includes: The network device receives first capability information, where the first capability information indicates that the terminal device supports a PEI.

Based on the foregoing technical solution, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation of the second aspect, the method further includes: The network device sends third indication information, where the third indication information indicates that the network device supports the PEI.

Based on the foregoing technical solution, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

A third aspect of this application provides a communication method. The method is performed by a terminal device, or the method is performed by a part of components (for example, a processor, a chip, or a chip system) in the terminal device, or the method may be implemented by a logic module or software that can implement all or some functions of the terminal device. In the third aspect and the possible implementations of the third aspect, an example in which the communication method is performed by the terminal device is used for description. In the method, when the terminal device receives a first message and access stratum security between the terminal device and a network device is not activated, the terminal device determines not to ignore first indication information in the first message, or the terminal device ignores at least one piece of information in the first message except first indication information and second indication information, where the first message indicates to release a radio resource control RRC connection between the terminal device and the network device, the first indication information indicates not to update first information, the first information indicates a last used cell of the terminal device, and the second indication information indicates wait time for accessing a network. The terminal device releases the RRC connection.

Based on the foregoing technical solution, the terminal device may maintain the first information indicating the last used cell of the terminal device. In a scenario in which the terminal device receives the first message indicating to release the RRC connection between the terminal device and the network device and releases the RRC connection, when the access stratum security between the terminal device and the network device is not activated, the terminal device determines not to ignore the first indication information in the first message, or the terminal device ignores the at least one piece of information in the first message except the first indication information and the second indication information. When the access stratum security is not activated, the terminal device may determine that the terminal device cannot communicate with the network device based on an access stratum security mechanism. Therefore, in a manner in which the terminal device determines not to ignore the first indication information in the first message (or the terminal device ignores the at least one piece of information in the first message except the first indication information and the second indication information), the terminal device does not update the first information based on a cell (where the cell is located in one or more cells corresponding to the network device) through which the first message is sent, so that a paging error caused by an incorrect update of the terminal device can be avoided, to enhance a PEI function implemented by the terminal device based on the first information and reduce power consumption of the terminal device.

In addition, in a manner in which the terminal device determines not to ignore the first indication information in the first message (or the terminal device ignores the at least one piece of information in the first message except the first indication information and the second indication information), the terminal device and the network device may be aligned in understandings on the first indication information, to reduce a possibility of a communication error.

Optionally, that terminal device ignores at least one piece of information in the first message except first indication information and second indication information may include: The terminal device ignores other information in the first message except the first indication information and the second indication information.

In a possible implementation of the third aspect, the method further includes: The terminal device determines, based on the first indication information, not to update the first information.

Based on the foregoing technical solution, a process in which the terminal device determines not to ignore the first indication information may include: The terminal device determines, based on the first indication information, not to update the first information, so that the terminal device determines, based on the first indication information sent by the network device, not to update the first information. In this way, the terminal device and the network device are aligned in understandings on the first indication information, to reduce a possibility of a communication error.

In a possible implementation of the third aspect, the first information includes information about the last used cell of the terminal device.

Optionally, the first information may include an identifier of the last used cell of the terminal device. For example, the identifier may be a CGI, a PCI, or the like.

In a possible implementation of the third aspect, when any one of the following is met, that the terminal device determines that access stratum security between the terminal device and the network device is not activated includes: The terminal device determines that no security mode command message is received; and after the terminal device receives the security mode command message, the terminal device determines that a process of deriving a key based on the security mode command message fails; or after the terminal device receives the security mode command message, the terminal device determines that integrity protection verification corresponding to the security mode command message fails.

Based on the foregoing technical solution, the terminal device may determine, in the foregoing plurality of manners, that the access stratum security between the terminal device and the network device is not activated, to improve flexibility of implementing the solution.

In a possible implementation of the third aspect, the method further includes: The terminal device sends first capability information, where the first capability information indicates that the terminal device supports paging early indication PEI.

Based on the foregoing technical solution, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation of the third aspect, the method further includes: The terminal device receives third indication information, where the third indication information indicates that the network device supports the PEI.

Based on the foregoing technical solution, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

A fourth aspect of this application provides a communication method. The method is performed by a network device, or the method is performed by a part of components (for example, a processor, a chip, or a chip system) in the network device, or the method may be implemented by a logic module or software that can implement all or some functions of the network device. In the fourth aspect and possible implementations of the fourth aspect, an example in which the communication method is performed by the network device is used for description. In the method, when the network device has sent a first message and access stratum security between a terminal device and the network device is not activated, the network device determines not to ignore first indication information in the first message, or the network device ignores at least one piece of information in the first message except first indication information and second indication information, where the first message indicates to release a radio resource control RRC connection between the terminal device and the network device, the first indication information indicates not to update first information, the first information indicates a last used cell of the terminal device, and the second indication information indicates wait time for accessing a network. The network device releases the RRC connection.

Based on the foregoing technical solution, in a scenario in which the network device sends the first message indicating to release the RRC connection between the terminal device and the network device and releases the RRC connection, when the access stratum security between the terminal device and the network device is not activated, the network device determines not to ignore the first indication information in the first message; or the network device ignores the at least one piece of information in the first message except the first indication information and the second indication information. When the access stratum security is not activated, the network device may determine that the network device cannot communicate with the terminal device based on an access stratum security mechanism. Therefore, in a manner in which the network device determines not to ignore the first indication information in the first message (or the network device ignores the at least one piece of information in the first message except the first indication information and the second indication information), the network device determines that the terminal device does not update the first information based on a cell (where the cell is located in one or more cells corresponding to the network device) through which the first message is sent, so that a paging error caused by an incorrect update of the terminal device can be avoided, to enhance a PEI function implemented by the terminal device based on the first information and reduce power consumption of the terminal device.

In addition, in a manner in which the network device determines not to ignore the first indication information in the first message (or the network device ignores the at least one piece of information in the first message except the first indication information and the second indication information), the terminal device and the network device may be aligned in understandings on the first indication information, to reduce a possibility of a communication error.

Optionally, that network device ignores at least one piece of information in the first message except first indication information and second indication information may include: The network device ignores information in the first message except the first indication information and the second indication information.

In a possible implementation of the fourth aspect, the method further includes: The network device determines, based on the first indication information, not to update second information, where the second information indicates one or more cells that have been accessed by the terminal device.

Based on the foregoing technical solution, the network device may determine, based on the first indication information, not to update the second information indicating the one or more cells that have been accessed by the terminal device, so that the terminal device and the network device are aligned in understandings on the first indication information, to reduce a possibility of a communication error.

In a possible implementation of the fourth aspect, the second information includes identifiers of the one or more cells that have been accessed by the terminal device.

Optionally, the identifiers of the one or more cells accessed by the terminal device may be a CGI, a PCI, or the like.

In a possible implementation of the fourth aspect, the first information includes information about the last used cell of the terminal device.

Optionally, the first information may include an identifier of the last used cell of the terminal device. For example, the identifier may be a CGI, a PCI, or the like.

In a possible implementation of the fourth aspect, the method further includes: When the access stratum security between the terminal device and the network device is not activated, the network device determines that the terminal device does not ignore the first indication information in the first message, or the network device determines that the terminal device ignores the at least one piece of information in the first message except first indication information and second indication information.

Based on the foregoing technical solution, when the access stratum security between the terminal device and the network device is not activated, the network device may determine that the network device cannot communicate with the terminal device based on an access stratum security mechanism. In view of this, the network device determines that the terminal device does not ignore the first indication information in the first message (or the network device determines that the terminal device ignores the at least one piece of information in the first message except the first indication information and the second indication information), so that the network device and the terminal device are aligned in understandings on the first information, to reduce a possibility of a communication error.

In a possible implementation of the fourth aspect, the method further includes: The network device sends the second information to a core network device.

Based on the foregoing technical solution, the network device may further send, to the core network device, the second information indicating the one or more cells that have been accessed by the terminal device, so that the core network device and the network device are aligned in understandings on the second information, to reduce a possibility of a communication error.

In a possible implementation of the fourth aspect, the method further includes: The network device receives first capability information, where the first capability information indicates that the terminal device supports a PEI.

Based on the foregoing technical solution, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation of the fourth aspect, the method further includes: The network device sends third indication information, where the third indication information indicates that the network device supports the PEI.

Based on the foregoing technical solution, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

A fifth aspect of this application provides a communication method. The method is performed by a terminal device, or the method is performed by a part of components (for example, a processor, a chip, or a chip system) in the terminal device, or the method may be implemented by a logic module or software that can implement all or some functions of the terminal device. In the fifth aspect and possible implementations of the fifth aspect, an example in which the communication method is performed by the terminal device is used for description. In the method, when the terminal device receives a first message and access stratum security between the terminal device and a network device is not activated, the terminal device processes first information based on the first message, where the first information indicates information about a last used cell of the terminal device, and the first message indicates to release a radio resource control RRC connection between the terminal device and the network device. The terminal device releases the RRC connection.

Based on the foregoing technical solution, the terminal device may maintain the first information indicating the last used cell of the terminal device. In a scenario in which the terminal device receives the first message indicating to release the RRC connection between the terminal device and the network device and releases the RRC connection, the terminal device processes the first information based on the first message. When the access stratum security is not activated, the terminal device may determine that the terminal device cannot communicate with the network device based on an access stratum security mechanism. Therefore, in a manner in which the terminal device processes the first information based on the first message, the terminal device and the network device are aligned in understandings on the first message, to reduce a possibility of a communication error.

In a possible implementation of the fifth aspect, that the terminal device processes first information based on the first message includes: When the first message includes first indication information, the terminal device determines not to update the first information, where the first indication information indicates not to update the first information.

Based on the foregoing technical solution, when the first message includes the first indication information indicating not to update the first information, the terminal device determines not to update the first information, so that the terminal device performs a corresponding operation based on an indication of the network device, to reduce a possibility of a communication error.

In a possible implementation of the fifth aspect, that the terminal device processes first information based on the first message includes: When the first message does not include first indication information, the terminal device updates the first information based on a cell corresponding to the first message, where the first indication information indicates not to update the first information.

Based on the foregoing technical solution, when the first message does not include the first indication information, the terminal device updates the first information based on the cell corresponding to the first message, so that the terminal device performs a corresponding operation based on an indication of the network device, to reduce a possibility of a communication error.

It should be understood that a process in which the terminal device updates the first information based on a cell corresponding to the first message includes: The terminal device updates the first information based on a cell identifier of a cell through which the first message is sent, or the terminal device updates the first information based on a cell identifier carried in the first message. This is not limited herein.

In a possible implementation of the fifth aspect, the first information includes information about the last used cell of the terminal device.

Optionally, the first information may include an identifier of the last used cell of the terminal device. For example, the identifier may be a CGI, a PCI, or the like.

In a possible implementation of the fifth aspect, when any one of the following is met, that the terminal device determines that access stratum security between the terminal device and the network device is not activated includes: The terminal device determines that no security mode command message is received; and after the terminal device receives the security mode command message, the terminal device determines that a process of deriving a key based on the security mode command message fails; or after the terminal device receives the security mode command message, the terminal device determines that integrity protection verification corresponding to the security mode command message fails.

Based on the foregoing technical solution, the terminal device may determine, in the foregoing plurality of manners, that the access stratum security between the terminal device and the network device is not activated, to improve flexibility of implementing the solution.

In a possible implementation of the fifth aspect, the method further includes: The terminal device sends first capability information, where the first capability information indicates that the terminal device supports a PEI.

Based on the foregoing technical solution, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation of the fifth aspect, the method further includes: The terminal device receives third indication information, where the third indication information indicates that the network device supports the PEI.

Based on the foregoing technical solution, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

A sixth aspect of this application provides a communication method. The method is performed by a network device, or the method is performed by a part of components (for example, a processor, a chip, or a chip system) in the network device, or the method may be implemented by a logic module or software that can implement all or some functions of the network device. In the sixth aspect and possible implementations of the sixth aspect, an example in which the communication method is performed by the network device is used for description. In the method, when the network device has sent a first message and access stratum security between a terminal device and the network device is not activated, the network device processes second information based on the first message, where the second information indicates one or more cells that have been accessed by the terminal device, and the first message indicates to release a radio resource control RRC connection between the terminal device and the network device. The network device releases the RRC connection.

Based on the foregoing technical solution, the network device may maintain the second information indicating the one or more cells that have been accessed by the terminal device. In a scenario in which the network device sends the first message indicating to release the RRC connection between the terminal device and the network device and releases the RRC connection, the network device processes the second information based on the first message. When the access stratum security is not activated, the network device may determine that the terminal device cannot communicate with the network device based on an access stratum security mechanism. Therefore, in a manner in which the network device processes the first information based on the first message, the terminal device and the network device are aligned in understandings on the first message, to reduce a possibility of a communication error.

In a possible implementation of the sixth aspect, that the network device processes second information based on the first message includes: When the first message includes first indication information, the network device determines not to update the second information, where the first indication information indicates not to update first information, and the first information indicates a last used cell of the terminal device.

Based on the foregoing technical solution, when the first message includes the first indication information indicating not to update the first information, the network device determines not to update the second information, so that the terminal device subsequently performs a corresponding operation based on an indication of the network device, to reduce a possibility of a communication error.

In a possible implementation of the sixth aspect, that the terminal device processes first information based on the first message includes: When the first message does not include first indication information, the terminal device updates the second information based on a cell corresponding to the first message, where the first indication information indicates not to update the first information, and the first information indicates information about a last used cell of the terminal device.

Based on the foregoing technical solution, when the first message does not include the first indication information, the network device updates the second information based on the cell corresponding to the first message, so that the terminal device subsequently performs a corresponding operation based on an indication of the network device, to reduce a possibility of a communication error.

It should be understood that a process in which the terminal device updates the first information based on a cell corresponding to the first message includes: The terminal device updates the first information based on a cell identifier of a cell through which the first message is sent, or the terminal device updates the first information based on a cell identifier carried in the first message. This is not limited herein. For example, in the foregoing embodiment, the terminal device updates the first information based on the cell identifier of the cell through which the first message is sent. In other words, the terminal device updates the information about the last used cell indicated by the first information as the cell identifier of the cell through which the first message is sent.

In a possible implementation of the sixth aspect, the first information includes information about the last used cell of the terminal device.

Optionally, the first information may include an identifier of the last used cell of the terminal device. For example, the identifier may be a CGI, a PCI, or the like.

In a possible implementation of the sixth aspect, the second information includes identifiers of the one or more cells that have been accessed by the terminal device.

Optionally, the identifiers of the one or more cells accessed by the terminal device may be a CGI, a PCI, or the like.

In a possible implementation of the sixth aspect, the method further includes: The network device sends the second information to a core network device.

Based on the foregoing technical solution, the network device may further send, to the core network device, the second information indicating the one or more cells that have been accessed by the terminal device, so that the core network device and the network device are aligned in understandings on the second information, to reduce a possibility of a communication error.

In a possible implementation of the sixth aspect, the method further includes: The network device determines, based on the first message, whether the terminal device updates the first information.

Based on the foregoing technical solution, the network device may further determine, based on the first message, whether the terminal device updates the first information, so that the network device determines behavior of the terminal device, to avoid a communication error.

In a possible implementation of the sixth aspect, the method further includes: The network device receives first capability information, where the first capability information indicates that the terminal device supports a PEI.

Based on the foregoing technical solution, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation of the sixth aspect, the method further includes: The network device sends third indication information, where the third indication information indicates that the network device supports the PEI.

Based on the foregoing technical solution, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

A seventh aspect of this application provides a communication apparatus. The apparatus can implement the method in any one of the first aspect or the possible implementations of the first aspect. The apparatus includes a corresponding unit or module configured to perform the foregoing method. The unit or module included in the apparatus can be implemented by software and/or hardware. For example, the apparatus may be a terminal device, or the apparatus may be a component (for example, a processor, a chip, or a chip system) in a terminal device, or the apparatus may be a logic module or software that can implement all or some functions of a terminal device. In the seventh aspect and possible implementations of the seventh aspect, an example in which the communication apparatus is a terminal device is used for description.

The apparatus includes a processing unit and a transceiver unit. When the transceiver unit receives a first message and access stratum security between the terminal device and a network device is not activated, the processing unit determines not to update first information, where the first information indicates a last used cell of the terminal device, and the first message indicates to release a radio resource control RRC connection between the terminal device and the network device. The processing unit releases the RRC connection.

In a possible implementation of the seventh aspect, the first message includes first indication information, and the first indication information indicates not to update the first information. When the access stratum security between the terminal device and the network device is not activated, the processing unit is further configured to ignore the first indication information.

In a possible implementation of the seventh aspect, the first message includes second indication information, and the second indication information indicates wait time for accessing a network. The processing unit is further configured to ignore at least one piece of information in the first message except the second indication information, where the at least one piece of information includes the first indication information, and the first indication information indicates not to update the first information.

In a possible implementation of the seventh aspect, the first information includes information about the last used cell of the terminal device.

In a possible implementation of the seventh aspect, when any one of the following is met, that the processing unit determines that access stratum security between the terminal device and a network device is not activated includes: The processing unit determines that a security mode command message is not received; and after the transceiver unit receives the security mode command message, the processing unit determines that a process of deriving a key based on the security mode command message fails; or after the transceiver unit receives the security mode command message, the processing unit determines that integrity protection verification corresponding to the security mode command message fails.

In a possible implementation of the seventh aspect, the transceiver unit is further configured to send first capability information, where the first capability information indicates that the terminal device supports a paging advance indication PEI.

In a possible implementation of the seventh aspect, the transceiver unit is further configured to receive third indication information, where the third indication information indicates that the network device supports the PEI.

In the seventh aspect of embodiments of this application, the composition modules of the communication apparatus may further be configured to: perform the steps performed in the possible implementations of the first aspect, and achieve corresponding technical effects. For details, refer to the first aspect. Details are not described herein again.

An eighth aspect of this application provides a communication apparatus. The apparatus can implement the method in any one of the second aspect or the possible implementations of the second aspect. The apparatus includes a corresponding unit or module configured to perform the foregoing method. The unit or module included in the apparatus can be implemented by software and/or hardware. For example, the apparatus may be a network device, or the apparatus may be a component (for example, a processor, a chip, or a chip system) in a network device, or the apparatus may be a logic module or software that can implement all or some functions of a network device. In the eighth aspect and possible implementations of the eighth aspect, an example in which the communication apparatus is a network device is used for description.

The apparatus includes a processing unit and a transceiver unit. When the transceiver unit has sent a first message and access stratum security between a terminal device and the network device is not activated, the processing unit determines not to update second information, where the second information indicates one or more cells that have been accessed by the terminal device, and the first message indicates to release a radio resource control RRC connection between the terminal device and the network device. The processing unit releases the RRC connection.

In a possible implementation of the eighth aspect, the first message includes first indication information, the first indication information indicates not to update the first information, and the first information indicates a last used cell of the terminal device. When the access stratum security between the terminal device and the network device is not activated, the processing unit determines that the terminal device ignores the first indication information.

In a possible implementation of the eighth aspect, the first message includes second indication information, and the second indication information indicates wait time for accessing a network. When the access stratum security between the terminal device and the network device is not activated, the processing unit determines that the terminal device ignores at least one piece of information in the first message except the second indication information, where the at least one piece of information includes first indication information, the first indication information indicates not to update the first information, and the first information indicates the last used cell of the terminal device.

In a possible implementation of the eighth aspect, when the access stratum security between the terminal device and the network device is not activated, the processing unit determines that the terminal device does not update the first information, where the first information indicates the last used cell of the terminal device.

In a possible implementation of the eighth aspect, the first information includes information about the last used cell of the terminal device.

In a possible implementation of the eighth aspect, the second information includes identifiers of the one or more cells that have been accessed by the terminal device.

In a possible implementation of the eighth aspect, the transceiver unit is further configured to send the second information to a core network device.

In a possible implementation of the eighth aspect, the transceiver unit is further configured to send third indication information, where the third indication information indicates that the network device supports a PEI.

In the eighth aspect of embodiments of this application, the composition modules of the communication apparatus may further be configured to: perform the steps performed in the possible implementations of the second aspect, and achieve corresponding technical effects. For details, refer to the second aspect. Details are not described herein again.

A ninth aspect of this application provides a communication apparatus. The apparatus may implement the method in any one of the third aspect or the possible implementations of the third aspect. The apparatus includes a corresponding unit or module configured to perform the foregoing method. The unit or module included in the apparatus can be implemented by software and/or hardware. For example, the apparatus may be a terminal device, or the apparatus may be a component (for example, a processor, a chip, or a chip system) in a terminal device, or the apparatus may be a logic module or software that can implement all or some functions of a terminal device. In the ninth aspect and possible implementations of the ninth aspect, an example in which the communication apparatus is a terminal device is used for description.

The apparatus includes a processing unit and a transceiver unit. When the transceiver unit receives a first message and access stratum security between the terminal device and a network device is not activated, the processing unit determines not to ignore first indication information in the first message, or the processing unit ignores at least one piece of information in the first message except first indication information and second indication information, where the first message indicates to release a radio resource control RRC connection between the terminal device and the network device, the first indication information indicates not to update first information, the first information indicates a last used cell of the terminal device, and the second indication information indicates wait time for accessing a network. The processing unit releases the RRC connection.

In a possible implementation of the ninth aspect, the processing unit is further configured to determine, based on the first indication information, not to update the first information.

In a possible implementation of the ninth aspect, the first information includes information about the last used cell of the terminal device.

In a possible implementation of the ninth aspect, when any one of the following is met, that the processing unit determines that access stratum security between the terminal device and a network device is not activated includes: The processing unit determines that a security mode command message is not received; and after the transceiver unit receives the security mode command message, the processing unit determines that a process of deriving a key based on the security mode command message fails; or after the transceiver unit receives the security mode command message, the processing unit determines that integrity protection verification corresponding to the security mode command message fails.

In a possible implementation of the ninth aspect, the transceiver unit is further configured to send first capability information, where the first capability information indicates that the terminal device supports a paging advance indication PEI.

In a possible implementation of the ninth aspect, the transceiver unit is further configured to receive third indication information, where the third indication information indicates that the network device supports the PEI.

In the ninth aspect of embodiments of this application, the composition modules of the communication apparatus may further be configured to: perform the steps performed in the possible implementations of the third aspect, and achieve corresponding technical effects. For details, refer to the third aspect. Details are not described herein again.

A tenth aspect of this application provides a communication apparatus. The apparatus may implement the method in any one of the fourth aspect or the possible implementations of the fourth aspect. The apparatus includes a corresponding unit or module configured to perform the foregoing method. The unit or module included in the apparatus can be implemented by software and/or hardware. For example, the apparatus may be a network device, or the apparatus may be a component (for example, a processor, a chip, or a chip system) in a network device, or the apparatus may be a logic module or software that can implement all or some functions of a network device. In the tenth aspect and possible implementations of the tenth aspect, an example in which the communication apparatus is a network device is used for description.

The apparatus includes a processing unit and a transceiver unit. When the transceiver unit has sent a first message and access stratum security between a terminal device and the network device is not activated, the processing unit determines not to ignore first indication information in the first message, or the processing unit ignores at least one piece of information in the first message except first indication information and second indication information, where the first message indicates to release a radio resource control RRC connection between the terminal device and the network device, the first indication information indicates not to update first information, the first information indicates a last used cell of the terminal device, and the second indication information indicates wait time for accessing a network. The processing unit releases the RRC connection.

In a possible implementation of the tenth aspect, the processing unit is further configured to determine, based on the first indication information, not to update second information, where the second information indicates one or more cells that have been accessed by the terminal device.

In a possible implementation of the tenth aspect, the second information includes identifiers of the one or more cells that have been accessed by the terminal device.

In a possible implementation of the tenth aspect, the first information includes information about the last used cell of the terminal device.

In a possible implementation of the tenth aspect, when the access stratum security between the terminal device and the network device is not activated, the processing unit determines that the terminal device does not ignore the first indication information in the first message, or the processing unit determines that the terminal device ignores the at least one piece of information in the first message except first indication information and second indication information.

In a possible implementation of the tenth aspect, the transceiver unit is further configured to send the second information to a core network device.

In a possible implementation of the tenth aspect, the transceiver unit is further configured to receive first capability information, where the first capability information indicates that the terminal device supports a paging advance indication PEI.

In a possible implementation of the tenth aspect, the transceiver unit is further configured to send third indication information, where the third indication information indicates that the network device supports the PEI.

In the tenth aspect of embodiments of this application, the composition modules of the communication apparatus may further be configured to: perform the steps performed in the possible implementations of the third aspect, and achieve corresponding technical effects. For details, refer to the third aspect. Details are not described herein again.

An eleventh aspect of this application provides a communication apparatus. The apparatus can implement the method in any one of the fifth aspect or the possible implementations of the fifth aspect. The apparatus includes a corresponding unit or module configured to perform the foregoing method. The unit or module included in the apparatus can be implemented by software and/or hardware. For example, the apparatus may be a terminal device, or the apparatus may be a component (for example, a processor, a chip, or a chip system) in a terminal device, or the apparatus may be a logic module or software that can implement all or some functions of a terminal device. In the ninth aspect and possible implementations of the ninth aspect, an example in which the communication apparatus is a terminal device is used for description.

The apparatus includes a processing unit and a transceiver unit. When the transceiver unit receives a first message and access stratum security between the terminal device and a network device is not activated, the processing unit determines processes first information based on the first message, where the first information indicates information about a last used cell of the terminal device, and the first message indicates to release a radio resource control RRC connection between the terminal device and the network device. The processing unit releases the RRC connection.

In a possible implementation of the eleventh aspect, that the processing unit processes first information based on the first message includes: When the first message includes first indication information, the processing unit determines not to update the first information, where the first indication information indicates not to update the first information.

In a possible implementation of the eleventh aspect, that the processing unit processes first information based on the first message includes: When the first message does not include first indication information, the processing unit updates the first information based on a cell corresponding to the first message, where the first indication information indicates not to update the first information.

In a possible implementation of the eleventh aspect, the first information includes information about the last used cell of the terminal device.

In a possible implementation of the eleventh aspect, when any one of the following is met, that the processing unit determines that access stratum security between the terminal device and a network device is not activated includes: The processing unit determines that a security mode command message is not received; and after the transceiver unit receives the security mode command message, the processing unit determines that a process of deriving a key based on the security mode command message fails; or after the transceiver unit receives the security mode command message, the processing unit determines that integrity protection verification corresponding to the security mode command message fails.

In a possible implementation of the eleventh aspect, the transceiver unit is further configured to send first capability information, where the first capability information indicates that the terminal device supports a paging advance indication PEI.

In a possible implementation of the eleventh aspect, the transceiver unit is further configured to receive third indication information, where the third indication information indicates that the network device supports the PEI.

In the eleventh aspect of embodiments of this application, the composition modules of the communication apparatus may further be configured to: perform the steps performed in the possible implementations of the fourth aspect, and achieve corresponding technical effects. For details, refer to the fourth aspect. Details are not described herein again.

A twelfth aspect of this application provides a communication apparatus. The apparatus can implement the method in any one of the sixth aspect or the possible implementations of the sixth aspect. The apparatus includes a corresponding unit or module configured to perform the foregoing method. The unit or module included in the apparatus can be implemented by software and/or hardware. For example, the apparatus may be a network device, or the apparatus may be a component (for example, a processor, a chip, or a chip system) in a network device, or the apparatus may be a logic module or software that can implement all or some functions of a network device. In the twelfth aspect and possible implementations of the twelfth aspect, an example in which the communication apparatus is a network device is used for description.

The apparatus includes a processing unit and a transceiver unit. When the transceiver unit has sent a first message and access stratum security between a terminal device and the network device is not activated, the processing unit processes second information based on the first message, where the second information indicates one or more cells that have been accessed by the terminal device, and the first message indicates to release a radio resource control RRC connection between the terminal device and the network device. The processing unit releases the RRC connection.

In a possible implementation of the twelfth aspect, that the processing unit processes second information based on the first message includes: When the first message includes first indication information, the processing unit determines not to update the second information, where the first indication information indicates not to update first information, and the first information indicates information about a last used cell of the terminal device.

In a possible implementation of the twelfth aspect, that the processing unit processes first information based on the first message includes: When the first message does not include first indication information, the processing unit updates the second information based on a cell corresponding to the first message, where the first indication information indicates not to update the first information, and the first information indicates information about a last used cell of the terminal device.

In a possible implementation of the twelfth aspect, the first information includes information about the last used cell of the terminal device.

In a possible implementation of the twelfth aspect, the second information includes identifiers of the one or more cells that have been accessed by the terminal device.

In a possible implementation of the twelfth aspect, the processing unit determines, based on the first message, whether the terminal device updates the first information.

In a possible implementation of the twelfth aspect, the transceiver unit is further configured to receive first capability information, where the first capability information indicates that the terminal device supports a paging advance indication PEI.

In a possible implementation of the twelfth aspect, the transceiver unit is further configured to send third indication information, where the third indication information indicates that the network device supports the PEI.

In the twelfth aspect of embodiments of this application, the composition modules of the communication apparatus may further be configured to: perform the steps performed in the possible implementations of the sixth aspect, and achieve corresponding technical effects. For details, refer to the sixth aspect. Details are not described herein again.

According to a thirteenth aspect, an embodiment of this application provides a communication apparatus, including at least one processor. The at least one processor is coupled to a memory, and the memory is configured to store a program or instructions; and the at least one processor is configured to execute the program or instructions, so that the apparatus implements the method according to any possible implementation of any one of the first aspect to the sixth aspect.

According to a fourteenth aspect, an embodiment of this application provides a communication apparatus, including at least one logic circuit and an input/output interface. The logic circuit and the input/output interface are configured to perform the method according to any possible implementation of any one of the first aspect to the sixth aspect.

According to a fifteenth aspect, an embodiment of this application provides a computer-readable storage medium storing one or more computer-executable instructions. When the computer-executable instructions are executed by a processor, the processor performs the method according to any possible implementation of any one of the first aspect to the sixth aspect.

According to a sixteenth aspect, an embodiment of this application provides a computer program product (or referred to as a computer program). When the computer program product is executed by a processor, the processor performs the method according to any possible implementation of any one of the first aspect to the sixth aspect.

According to a seventeenth aspect, an embodiment of this application provides a chip system. The chip system includes at least one processor, configured to support a communication apparatus in implementing a function in the method according to any possible implementation of any one of the first aspect to the sixth aspect.

In a possible design, the chip system may further include a memory. The memory is configured to store to program instructions and data that are necessary for the communication apparatus. The chip system may include a chip, or may include a chip and another discrete component. Optionally, the chip system further includes an interface circuit, and the interface circuit provides program instructions and/or data for the at least one processor.

According to an eighteenth aspect, an embodiment of this application provides a communication system. The communication system includes the terminal device in the first aspect and the network device in the second aspect, or the communication system includes the terminal device in the third aspect and the network device in the fourth aspect, the communication system includes the terminal device in the fifth aspect and the network device in the sixth aspect.

Alternatively, the communication system includes the communication apparatus in the seventh aspect and the communication apparatus in the eighth aspect, or the communication system includes the communication apparatus in the ninth aspect and the communication apparatus in the tenth aspect, or the communication system includes the communication apparatus in the eleventh aspect and the communication apparatus in the twelfth aspect, or the communication system includes the communication apparatus in the thirteenth aspect, or the communication system includes the communication apparatus in the fourteenth aspect.

For technical effects brought by any design manner in the seventh aspect to the eighteenth aspect, refer to technical effects brought by different design manners in any one of the first aspect to the sixth aspect. Details are not described herein again.

## BRIEF DESCRIPTION OF DRAWINGS

FIG. 1a is a diagram of a communication scenario according to this application;
FIG. 1b is another diagram of a communication scenario according to this application;
FIG. 1c is another diagram of a communication scenario according to this application;
FIG. 2a is a diagram of a paging process according to this application;
FIG. 2b is another diagram of a paging process according to this application;
FIG. 3a is another diagram of a communication scenario according to this application;
FIG. 3b is another diagram of a communication scenario according to this application;
FIG. 4 is a diagram of a communication method according to this application;
FIG. 5 is another diagram of a communication method according to this application;
FIG. 6 is another diagram of a communication method according to this application;
FIG. 7 is another diagram of a communication method according to this application;
FIG. 8 is another diagram of a communication method according to this application;
FIG. 9 is a diagram of a communication apparatus according to this application;
FIG. 10 is another diagram of a communication apparatus according to this application;
FIG. 11 is another diagram of a communication apparatus according to this application; and
FIG. 12 is another diagram of a communication apparatus according to this application.

## DESCRIPTION OF EMBODIMENTS

The following clearly and completely describes the technical solutions in embodiments of this application with reference to the accompanying drawings in embodiments of this application.

First, some terms in embodiments of this application are explained and described, to facilitate understanding of a person skilled in the art.

(1) Terminal device: The terminal device may be a wireless terminal device that can receive scheduling and indication information of a network device. The wireless terminal device may be a device that provides voice and/or data connectivity for a user, or a handheld device with a wireless connection function, or another processing device connected to a wireless modem.

The terminal device may communicate with one or more core networks or the Internet through a radio access network (radio access network, RAN). The terminal device may be a mobile terminal device like a mobile phone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. The terminal device may alternatively be a wearable device and a terminal device in a next generation communication system, for example, a terminal device in a 5G communication system or a terminal device in a future evolved public land mobile network (public land mobile network, PLMN).

(2) Network device: The network device may be a device in a wireless network. For example, the network device may be a radio access network (radio access network, RAN) node (or device), or may be referred to as a base station, through which the terminal device accesses the wireless network. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that the network configurations of the network device and the terminal device are aligned. Alternatively, through a network configuration preset in the network device and a network configuration preset in the terminal device, the network configurations of the network device and the terminal device are aligned. Specifically, "alignment" means that when there is an interaction message between the network device and the terminal device, the network device and the terminal device have a consistent understanding of a carrier frequency for receiving and sending the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Radio resource control (radio resource control, RRC) status: The terminal device has at least three RRC statuses: an RRC connected state (connected state), an RRC idle state (idle state), and an inactive state (inactive state).

The RRC connected state (which may also be referred to as a connected state for short, where the "connected state" and the "RRC connected state" are a same concept, and are interchangeable in this application): The terminal device can transmit data after establishing an RRC connection to a network.

The RRC idle state (which may also be referred to as an idle state for short, where the "idle state" and the "RRC idle state" are a same concept, and are interchangeable in this specification): The terminal device does not establish the RRC connection to the network, and a base station does not store a context of the terminal device. If the terminal device needs to enter the RRC connected state from the RRC idle state, the terminal device needs to initiate an RRC connection establishment process first.

The RRC inactive state (which may also be briefly referred to as an inactive state, where an "inactivated state", a "deactivated state", the "inactive state", the "RRC inactive state", and an "RRC deactivated state" are a same concept, and are interchangeable in this specification): The terminal device previously entered the RRC connected state, and then the base station released the RRC connection, but the base station stored the context of the terminal device. If the terminal device needs to enter the RRC connected state from the RRC inactive state again, the terminal device needs to initiate an RRC resume process (or referred to as an RRC connection resume process). Compared with the RRC setup process, the RRC resume process has a shorter delay and lower signaling overheads. However, the base station needs to store the context of the terminal device, resulting in storage overheads of the base station.

(4) System information (system information, SI)

It should be understood that the system information is a message sent by a base station, and includes information required for UE initialization and information related to some other functions/features. The system information is classified into minimum system information (minimum SI) and other system information (other SI, OSI). The minimum system information includes a master information block (master information block, MIB) and a system information block 1 (system information block 1, SIB 1). The SIB 1 is also referred to as remaining minimum system information (remaining minimum SI, RMSI).

Optionally, the MIB is periodically broadcast on a broadcast channel (broadcast channel, BCH). The SIB1 is periodically broadcast on a downlink shared channel (downlink shared channel, DL-SCH), or is sent to a terminal device in the RRC connected mode (RRC_CONNECTED) by using dedicated signaling.

The other system information includes other SIBs such as a SIB 2 to a SIB 9. The other SIBs are periodically broadcast on the DL-SCH, or are broadcast on the DL-SCH on demand (on demand) (that is, the network device broadcasts a SIB only when the terminal device in the RRC idle state (RRC_IDLE) or the RRC inactive state (RRC_INACTIVE) requests the SIB, and otherwise, the network device does not send the SIB), or are sent to UE in the RRC connected mode by using dedicated signaling.

Optionally, a basic procedure in which the terminal device in the RRC idle mode and the RRC inactive mode obtains the system information is as follows: The terminal device first obtains the MIB, obtains the SIB 1 based on scheduling information in the MIB, and then obtains another SIB based on scheduling information in the SIB 1.

Optionally, parameters such as a default paging cycle T, a quantity (N) of PFs in the paging cycle, a PF offset (PF_offset), and a quantity (Ns) of POs corresponding to one PF are configured in the SIB 1.

(5) Configuration and pre-configuration: In this application, both the configuration and the pre-configuration are used. The configuration means that a network device/ a server sends configuration information of some parameters or values of the parameters to a terminal by using a message or signaling, so that the terminal determines, based on the values or the information, a communication parameter or a resource used for transmission. Similar to the configuration, the pre-configuration may be parameter information or a parameter value negotiated by a network device/server with a terminal device in advance, or may be parameter information or a parameter value that is used by a base station/network device or a terminal device and that is specified in a standard protocol, or may be parameter information or a parameter value pre-stored in a base station/server or a terminal device. This is not limited in this application.

Further, these values and parameters may be changed or updated.

(6) The terms "system" and "network" in embodiments of this application may be used interchangeably. "At least one" means one or more, and "a plurality of" means two or more than two. "And/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In this application, unless otherwise specified, for same or similar parts of embodiments, refer to each other. In embodiments of this application and methods/designs/implementations in embodiments, unless otherwise specified or logic conflicts occur, terms and/or descriptions between different embodiments and between the methods/designs/implementations in embodiments are consistent and may be mutually referenced, different embodiments and technical features in the methods/designs/implementations in embodiments may be combined to form a new embodiment, method, or implementation based on an internal logic relationship thereof. The following implementations of this application do not constitute a limitation on the protection scope of this application.

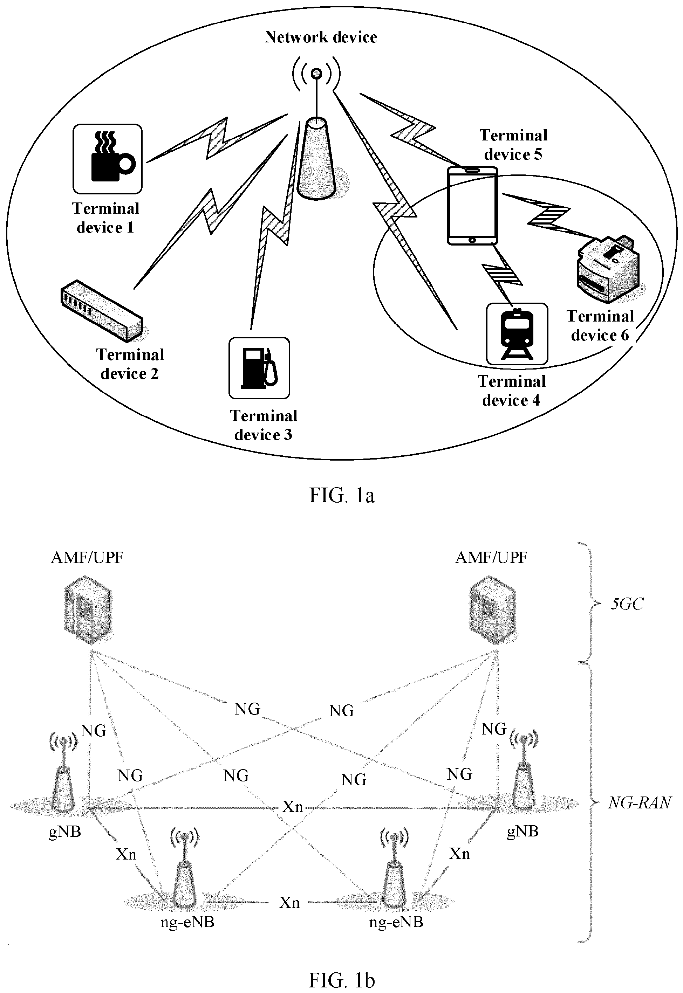

FIG. 1a is a diagram of a communication system according to this application. FIG. 1a shows an example of one network device 101 and six terminal devices. The six terminal devices are a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a transport means, the terminal device 5 is a mobile phone, and the terminal device 6 is a printer is used for description.

As shown in FIG. 1a, in a communication process, a signal sending device (or referred to as a transmit end or a transmit end device) may be a network device, and a signal receiving device (or referred to as a receive end or a receive end device) may be a terminal device; or a signal sending device may be a terminal device, and a signal receiving device may be a network device; or a signal sending device and a signal receiving device each may be a network device; or both a signal sending device and a signal receiving device each may be terminal devices.

This application may be applied to a long term evolution (long term evolution, LTE) system, a new radio (new radio, NR) system, or a communication system evolved after 5G (for example, 6G). The communication system includes at least one network device and/or at least one terminal device.

In an implementation example, FIG. 1b is a diagram of an architecture of a 5G NR system. A 5G core network (5G core network, 5GC) may include network elements such as an access and mobility management function (Aaccess and mobility management function, AMF) and a user plane function (user plane function, UPF). A 5G radio access network (NG-RAN) may include network elements such as a 5G access network (denoted as a gNB) and a 4G access network (denoted as an ng-eNB) connected to the 5GC.

Optionally, in the example shown in FIG. 1b, a serving base station gNB of the terminal device is responsible for providing a user plane and control plane protocol function of 5G NR for the terminal device; and a serving base station ng-eNB of the terminal device is responsible for providing a user plane and control plane protocol function of 4G E-UTRA for the terminal device.

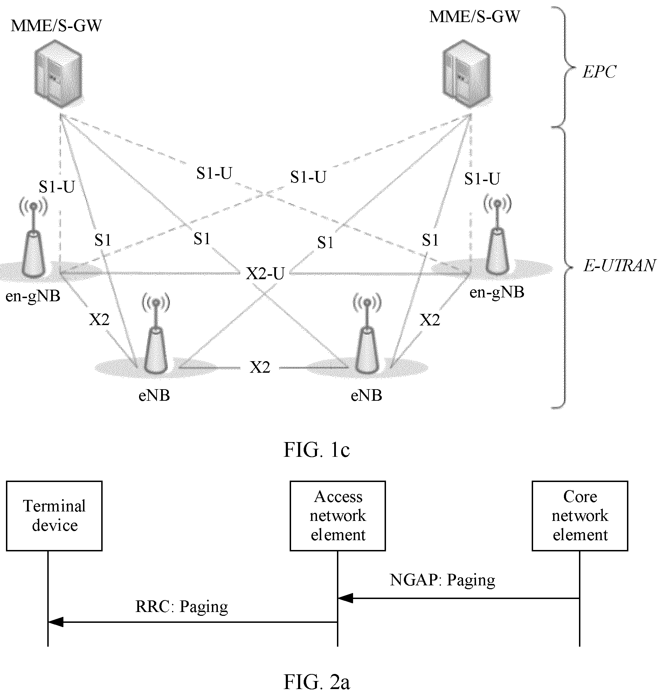

In another implementation example, FIG. 1c is a diagram of an architecture of an LTE system. A 4G core network may be an evolved packet core (evolved packet core, EPC), and includes network elements such as a mobility management entity (mobility management entity, MME) and a serving gateway (serving gateway, S-GW). A 4G radio access network may be an E-UTRAN, and may include network elements such as a 4G base station (denoted as an eNB) and a 5G base station (denoted as an en-gNB) connected to the EPC.

Optionally, in the example shown in FIG. 1c, a serving base station eNB of the terminal device is responsible for providing a user plane and control plane protocol function of the LTE for UE; and a serving base station en-gNB of the terminal device is responsible for providing a user plane and control plane protocol function of the 5G NR for the terminal device.

In any implementation example shown in FIG. 1a to FIG. 1c, the network device may initiate paging to the terminal device. The paging means that the network device sends paging to a terminal device on a paging occasion (paging occasion, PO) calculated by the network device, and the terminal device receives a paging message on the same PO. In this way, an objective of searching for a specific terminal device in a network is implemented.

In addition, the paging supports discontinuous reception (discontinuous reception, DRX). In this way, the terminal device may wake up only in fixed time to receive the paging message, and may sleep in another time to reduce power consumption and increase battery use time. For example, a cycle of each wake-up is a DRX cycle. One DRX cycle includes one or more paging frames (paging frame, PF), one PF corresponds to one or more POs, and one terminal device needs to receive the paging message on a PO.

Optionally, the PF and the PO for paging are determined in the following manners.

A system frame number (denoted as (SFN + PF_offset) mod T) of the PF is determined in the following manner:

$$(SFN + PF\_offset) \bmod T = (T \operatorname{div} N) * (terminal\ device\_ID \bmod N)$$

An index (denoted as i_s) of the PO is determined in the following manner:

$$i\_s = floor\ (terminal\ device\_ID/N) \bmod Ns$$

Each parameter is defined as follows:

T: a DRX cycle of the terminal device.
N: a quantity of PFs in a paging cycle.
PF_offset: a PF offset.
UE_ID: 5G-S-TMSI mod 1024.

For example, FIG. 2a is a diagram of a basic paging procedure. The entire procedure of initiating the paging by a core network is as follows.

1. A core network element (for example, an AMF) sends an NGAP paging message to an access network element (for example, a gNB), where the NGAP paging message carries a paging record list of the terminal device, and the paging record list including a 5G-S-temporary mobile subscription identifier (5G-S- Temporary mobile subscription identifier, 5G-S-TMSI) is sent to the network device.
2. After receiving the NGAP paging message, an access network element may calculate specific PF and PO locations based on a paging parameter and the 5G-S-TMSI.
3. The terminal device calculates the specific PF and PO location for paging based on the terminal device identifier 5G-S-TMSI, and descrambles and decodes a paging physical downlink control channel (physical downlink control channel, PDCCH) and a physical downlink shared channel (physical downlink shared channel, PDSCH (a paging message) by using a paging message-radio network temporary identifier (paging-radio network temporary identifier, P-RNTI) at the moment.

In the paging process, when a plurality of terminal devices monitor a same paging occasion (paging occasion, PO), if paging is performed only for some of the plurality of terminal devices, for a terminal device that is not paged, unnecessary paging reception exists, and unnecessary power consumption is generated. This case is referred to as a paging false alarm (false alarm).

It can be learned from the foregoing implementation example of the paging process that one of main reasons for generating a paging false alarm is that the plurality of terminal devices monitor a same PO. According to a calculation formula specified in a protocol, although 5G-S-TMSIs allocated to one core network may be different, UE_IDs (namely, 5G-S-TMSI mod 1024) may be the same. It can be learned from the foregoing manner of determining the PF and the PO that PO locations calculated by different terminal devices may be the same. In addition, in a paging mechanism, the terminal device obtains scheduling information of a paging message when receiving paging downlink control information (downlink control information, DCI), but cannot learn whether the current paging message is a paging message for the terminal device. In this case, the terminal device can only determine, based on terminal device identifier information in the paging message, whether the current paging is for the terminal device after subsequently receiving and decoding the paging message on the PDSCH. Therefore, when the plurality of terminal devices monitor a same PO, if paging is performed only for some of the terminal devices, for a terminal device that is actually not paged, unnecessary paging reception exists, and unnecessary power consumption of the terminal device is generated.

Currently, a mechanism for grouping terminal devices is one of technologies for reducing a paging false alarm. A basic idea of the technology is to group terminal devices that monitor a same PO (that is, divide terminal devices on a same PO into different groups). When the network device performs paging, PEI indicates a quantity of POs on which current paging is performed and indicates that terminal devices are divided into different terminal device subgroups on each PO. In this way, before receiving the paging PDCCH and the paging PDSCH (the paging message), the terminal device can learn whether paging needs to be received this time, to reduce a probability that the terminal device receives and decodes paging unnecessarily, and further reduce power consumption generated when the terminal device decodes the paging PDCCH and the paging PDSCH (the paging message) that is not for the terminal device.

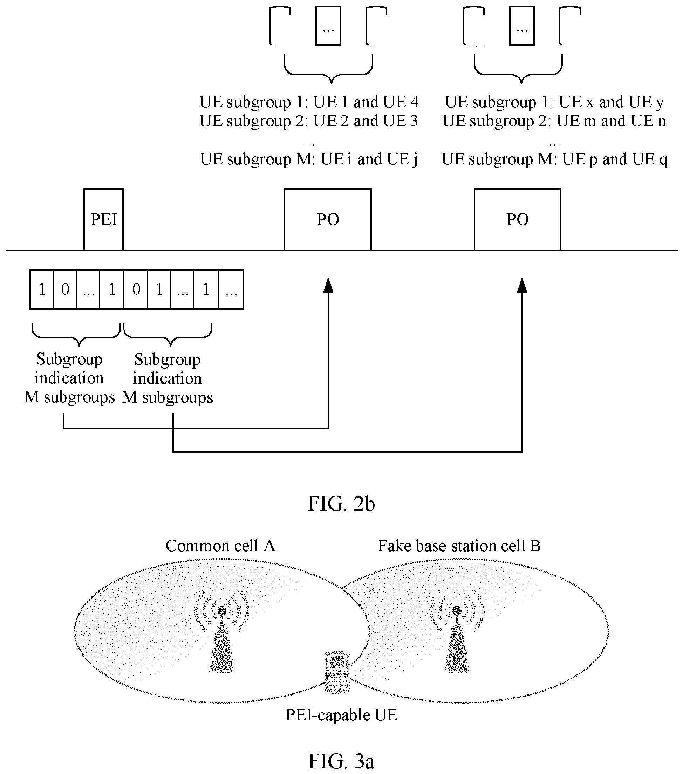

Optionally, the PEI indicates the terminal device by using a PDCCH of a format (DCI2-7). The PEI can indicate that whether a terminal device subgroup in several subsequent POs and each PO needs to monitor the paging PDCCH and the paging PDSCH (the paging message). An implementation example is shown in FIG. 2b. The terminal device 1 (denoted as UE 1 in the figure) and the terminal device 4 (denoted as UE 4 in the figure) are a terminal device subgroup 1 in a first PO. A first subgroup in M subgroups to which the first PO belongs is indicated by the PEI as "1", indicating that the terminal device 1 and the terminal device 4 need to monitor the PDCCH at a location of the first PO, and decode the PDSCH (the paging message) based on scheduling information indicated by paging DCI after the paging DCI is decoded. The terminal device 2 (denoted as UE 2 in the figure) and the terminal device 3 (denoted as UE 3 in the figure) are a terminal device subgroup 2 in the first PO. A first subgroup in M subgroups to which the first PO belongs is indicated by the PEI as "0", indicating the terminal device 2 and the terminal device 3 do not need to monitor the PDCCH at the location of the first PO.

In addition, indication information (for example, the indication information may be a lastUsedCellOnly-r17 information element in a pei-Config-r17 information element) is added to the SIB 1 sent by the network device. When the indication information exists: The terminal device needs to determine, based on whether a current cell is a last used cell (last used cell) of the terminal device, whether to monitor the PEI. However, for the terminal device, how to determine the last used cell of the terminal device is an urgent technical problem to be resolved.

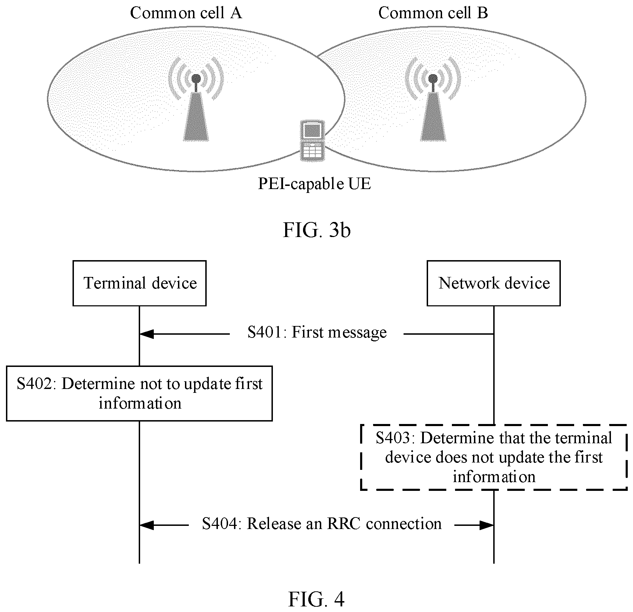

In a possible implementation, the terminal device may determine the last used cell of the terminal device based on a status of an RRC release message. Specifically, a cell through which the RRCRelease message that does not include the noLastCellUpdate-r17 information element and that is recently received by the terminal device is the last used cell of the terminal device. In other words, the noLastCellUpdate-r17 information element is added to the RRCRelease message. If the noLastCellUpdate-r17 information element exists, the last used cell used for the PEI is not updated. Otherwise, the last used cell is updated to the current cell. However, for the terminal device, in a process of determining the last used cell based on this implementation, there may be an incorrect update process. The following provides descriptions with reference to implementation examples in FIG. 3a (denoted as a scenario 1 below) and FIG. 3b (denoted as a scenario 2 below).

The scenario 1 shown in FIG. 3a is considered. A terminal device that supports a PEI capability first camps on a cell A, and then establishes a connection. After the terminal device receives an RRCRelease message from the cell A, and a SIB 1 broadcast by the cell A, the terminal device stores the last used cell as the cell A if a PEI configuration includes the lastUsedCellOnly-r17 information element, and the noLastCellUpdate-r17 information element does not exist in the RRCRelease message from the cell A.

In this case, if there is a cell B nearby (for example, the cell B may be located in one or more cells corresponding to a fake base station), because downlink power is higher and a signal received by the terminal device from the cell B is better, the terminal device may camp on the cell B in a reselection/redirection manner, and then initiate link establishment in the cell B. After the link establishment succeeds, non-access stratum (non-access stratum, NAS) and access stratum (access stratum, AS) authentication is performed. After the authentication fails, the cell B delivers an RRCRelease message over an air interface.

The scenario 2 shown in FIG. 3b is considered. Similar to an implementation process of the scenario 1, the terminal device that supports the PEI capability first camps on a cell A of an NR network device, and then establishes a connection. The terminal device receives an RRCRelease message over an interface from a gNB, and a SIB 1 broadcast by the cell A. If the PEI configuration includes the lastUsedCellOnly-r17 information element, and the noLastCellUpdate-r17 information element does not exist in the RRCRelease message over an air interface, the terminal device stores the last used cell as the cell A.

In this case, if there is a common cell B nearby (for example, the cell B may be located in one or more cells corresponding to a normally working base station (that is, the base station is not a fake base station)), the terminal device may camp on the cell B in a reselection/redirection manner, and then initiate link establishment on the cell B. Because an access network element is temporarily overloaded or an access network element temporarily finds that a core network element is overloaded, a connection cannot be established between the access network element and the core network element, and AS security cannot be activated. In this case, the cell B delivers an RRCRelease message over an air interface to release the terminal device, and instructs, by using noLastCellUpdate, the terminal device not to update the last used cell.

For the scenario 1 shown in FIG. 3a:

In one aspect, because the terminal device receives the RRCRelease message over an air interface on the cell B of the fake base station, if the AS security is not activated, the terminal device ignores, according to a stipulation in the protocol/standard, content except a wait time (waitTime) parameter carried in the RRCRelease message. Regardless of whether the RRCRelease message over an air interface carries the noLastCellUpdate-r17 information element, the last used cell is incorrectly updated to the cell B. Therefore, in a process of subsequently reselecting to the cell A from the cell B, a PEI function cannot be normally used as the last used cell is the cell B, not the cell A.

For the scenario 2 shown in FIG. 3b:

Because the terminal device receives the RRCRelease message over an air interface on the cell B, if the AS security is not activated, the terminal device ignores, according to a stipulation in the protocol/standard, content except a wait time (waitTime) parameter carried in the RRCRelease message. Although the RRCRelease message over an air interface carries the noLastCellUpdate-r17 information element, the last used cell is incorrectly updated to the cell B according to the protocol. Therefore, in a process of subsequently reselecting to the cell A from the cell B, a PEI function cannot be normally used as the last used cell is the cell B, not the cell A.

It can be learned from the foregoing content that how to determine the last used cell of the terminal device is an urgent technical problem to be resolved. In addition, the implementations used in the implementation examples shown in FIG. 3a and FIG. 3b easily cause a problem that the PEI function cannot be normally used. In view of this, to resolve the foregoing problem, this application provides a communication method and a communication apparatus, to avoid a paging error caused by an incorrect update of a terminal device, to enhance a PEI function implemented by the terminal device based on first information, and reduce power consumption of the terminal device. The following provides further descriptions with reference to the accompanying drawings.

FIG. 4 is a diagram of an implementation of a communication method according to this application.

S401: A network device sends a first message.

In this embodiment, the network device sends the first message in step S401, and correspondingly, a terminal device receives the first message in step S401. The first message indicates to release a radio resource control (radio resource control, RRC) connection between the terminal device and the network device.

In this application, a message name of the first message indicating to release the RRC connection between the terminal device and the network device may be an RRCRelease (RRCReleace) message, and the name is a name in a current communication system. In a future communication system, a name of the message indicating to release the RRC connection between the terminal device and the network device may change with evolution of the communication system.

S402: The terminal device determines not to update first information.

In this embodiment, when access stratum (access stratum, AS) security between the terminal device and the network device is not activated, the terminal device determines not to update the first information in step S402. The first information indicates a last used cell of the terminal device.

It should be understood that the last used cell (last used cell), indicated by the first information, of the terminal device may be referred to as a recently accessed cell of the terminal device, a cell recently accessed by the terminal device, a cell through which a connection of the terminal device is released, a cell through which the first message is sent to the terminal device, a cell last served by the terminal device, or the like.

It should be noted that, in step S402, that the terminal device determines not to update the first information may be expressed as that the terminal device does not update the first information, or may be expressed as that the terminal device determines not to update the first information without identifying whether the first message carries indication information indicating to update (or not to update) the first information, or may be expressed as that the terminal device does not perform an update of the first information, or may be expressed as that the terminal device keeps the first information unchanged, or may be expressed as that the first information maintained by the terminal device remains unchanged.

In a possible implementation, the first information that the terminal device determines not to update in step S402 includes information about the last used cell of the terminal device.

Optionally, the first information may include an identifier of the last used cell of the terminal device. For example, the identifier may be a cell global identifier (cell global identifier, CGI) or a physical cell identifier (physical cell identifier, PCI).

In an implementation example, the last used cell indicated by the first information maintained by the terminal device before step S401 is a cell 1. Then, the terminal device receives the first message from a cell 2 (the cell 2 is located in one or more cells corresponding to the network device that sends the first message in step S401) in step S401. In step S402, the terminal device determines not to update the first information, to be specific, the terminal device determines, in step S402, that the maintained first information does not need to be updated, and still maintains the last used cell indicated by the first information as the cell 1.

In another implementation example, the last used cell indicated by the first information maintained by the terminal device before step S401 is empty (that is, the terminal device has not maintained the first information of the terminal device). Then, the terminal device receives the first message from the cell 2 (the cell 2 is located in one or more cells corresponding to the network device that sends the first message in step S401) in step S401. In step S402, the terminal device determines not to update the first information, to be specific, the terminal device determines, in step S402, that the maintained first information does not need to be updated, and still maintains that the last used cell indicated by the first information is empty (that is, the cell 2 is not maintained as the last used cell indicated by the first information).

In a possible implementation, after the network device sends the first message in step S401, when access stratum security between the terminal device and the network device is not activated, the network device determines that the terminal device (after step S401, for example, in step S402) does not update the first information, where the first information indicates the last used cell of the terminal device. Specifically, when the access stratum security between the terminal device and the network device is not activated, the network device may determine that the network device cannot communicate with the terminal device based on an access stratum security mechanism. In view of this, the network device determines that the terminal device does not update the first information, so that the network device and the terminal device are aligned on understandings on the first information are aligned, to reduce a possibility of a communication error.

In a possible implementation, the first message received by the terminal device in step S401 includes first indication information, and the first indication information indicates not to update the first information. Correspondingly, in step S402, when the access stratum security between the terminal device and the network device is not activated, the terminal device ignores the first indication information. Specifically, when the access stratum security between the terminal device and the network device is not activated, the terminal device may determine that the terminal device cannot communicate with the network device based on the access stratum security mechanism. Therefore, the terminal device may ignore the first indication information carried in the first message and determine not to update the first information. In other words, the terminal device may determine not to update the first information without identifying whether the first message carries indication information indicating to update (or not to update) the first information, so as to avoid a paging error caused by an incorrect update of the terminal device.

It should be understood that, in this application, a name of the first indication information may be a noLastCellUpdate (noLastCellUpdate) information element/field/domain/parameter. The name is a name in a current communication system. In a future communication system, a name of the first indication information may change with evolution of the communication system.

In a possible implementation, the first message received by the terminal device in step S401 includes second indication information, and the second indication information indicates wait time (wait time) for accessing a network. Correspondingly, in step S402, the terminal device ignores at least one piece of information in the first message except the second indication information, where the at least one piece of information includes the first indication information, and the first indication information indicates not to update the first information. Specifically, the first message received by the terminal device may include the second indication information indicating the wait time for accessing the network, so that the terminal device can subsequently re-establish the connection to the network device based on the second indication information. In addition, when the access stratum security between the terminal device and the network device is not activated, the terminal device may determine that the terminal device cannot communicate with the network device based on the access stratum security mechanism. Therefore, the terminal device may ignore at least one piece of information in the first message except the second indication information.

Optionally, that the terminal device ignores at least one piece of information in the first message except the second indication information may include: The terminal device ignores information in the first message except the second indication information.

Optionally, the second indication information may alternatively be expressed in another manner, including: The second indication information indicates timing duration of a timer T302 (where T302 indicates wait time for re-establishing or resuming the RRC connection by the terminal device), the second indication information indicates wait time of an access attempt (access attempt) of the terminal device, and the second indication information indicates wait time for controlling the terminal device to establish the RRC connection, and the like.

It should be understood that, in this application, a name of the second indication information may be a wait time (waitTime) information element/field/domain/parameter. The name is a name in a current communication system. In a future communication system, a name of the second indication information may change with evolution of the communication system.

Optionally, after step S401, when the access stratum security between the terminal device and the network device is not activated, the network device determines that the terminal device ignores at least one piece of information in the first message except the second indication information, where the at least one piece of information includes first indication information, the first indication information indicates not to update the first information, and the first information indicates the last used cell of the terminal device. Specifically, the first message sent by the network device in step S401 may include the second indication information indicating the wait time for accessing the network, so that the terminal device can subsequently re-establish the connection to the network device based on the second indication information. In addition, when the access stratum security between the terminal device and the network device is not activated, the network device may determine that the network device cannot communicate with the terminal device based on an access stratum security mechanism. In view of this, the network device may determine that the terminal device ignores at least one piece of information in the first message except the second indication information, so that the network device and the terminal device are aligned in understandings on the first message, to reduce a possibility of a communication error.

In a possible implementation, when any one of the following is met, that the terminal device determines that access stratum security between the terminal device and the network device is not activated in step S402 includes: The terminal device determines that no security mode command message is received; and after the terminal device receives the security mode command message, the terminal device determines that a process of deriving a key based on the security mode command message fails; or after the terminal device receives the security mode command message, the terminal device determines that integrity protection verification corresponding to the security mode command message fails. Specifically, the terminal device may determine, in the foregoing plurality of manners, that the access stratum security between the terminal device and the network device is not activated, to improve flexibility of implementing the solution.

In a possible implementation, before step S401, the method further includes: The terminal device sends first capability information, where the first capability information indicates that the terminal device supports a PEI. Specifically, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation, in the embodiment shown in FIG. 4 (before or after any step), the method further includes: The terminal device receives third indication information, where the third indication information indicates that the network device supports the PEI. Specifically, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

The foregoing describes an implementation process that may be performed by the terminal device in step S402 when the access stratum security between the terminal device and the network device is not activated. The following describes an example of an implementation process that may be performed by the network device in this case.

In a possible implementation, when it is determined that the network device has sent the first message sent in step S401 and the access stratum security between the terminal device and the network device is not activated, in step S403, the network device determines not to update second information, where the second information indicates one or more cells that have been accessed by the terminal device.

Specifically, the network device may maintain the second information indicating the one or more cells that have been accessed by the terminal device. In a scenario in which the network device sends the first message indicating to release the RRC connection between the terminal device and the network device and releases the RRC connection, when the access stratum security between the terminal device and the network device is not activated, the network device determines not to update the second information. When the access stratum security is not activated, the network device may determine that the network device cannot communicate with the terminal device based on an access stratum security mechanism. Therefore, in a manner in which the network device determines not to update the second information, the network device does not update the second information based on a cell (where the cell is located in one or more cells corresponding to the network device) through which the first message is sent, so that a paging error caused by an incorrect update of the network device can be avoided, to enhance a PEI function implemented by the network device based on the second information and reduce power consumption of the network device.

Optionally, that the network device determines not to update the second information may be expressed as that the network device does not update the second information, or may be expressed as that the network device determines not to update the second information without identifying whether the first message carries indication information indicating to update (or not to update) the first information, or may be expressed as that the network device does not perform an update of the second information, or may be expressed as that the network device keeps the second information unchanged, or may be expressed as that the second information maintained by the network device remains unchanged.

Optionally, after step S401, when the access stratum security between the terminal device and the network device is not activated, in step S403, the network device determines that the terminal device ignores the first indication information. Specifically, when the access stratum security between the terminal device and the network device is not activated, the network device may determine that the network device cannot communicate with the terminal device based on the access stratum security mechanism. In view of this, the network device determines that the terminal device ignores the first indication information, so that the network device and the terminal device are aligned in understandings on the first information, to reduce a possibility of a communication error.

In a possible implementation, the network device sends the second information to a core network device. Specifically, the network device may further send, to the core network device, the second information indicating the one or more cells that have been accessed by the terminal device, so that the core network device and the network device are aligned in understandings on the second information, to reduce a possibility of a communication error.

S404: Release the RRC connection between the terminal device and the network device.

In this embodiment, after the network device sends the first message in step S401, the network device releases the RRC connection to the terminal device in step S404. After the terminal device receives the first message in step S401, the terminal device releases the RRC connection to the network device in step S404.

It should be noted that both step S402 and step S404 are performed after step S401. However, an execution sequence of step S402 and step S404 is not limited in this embodiment. For example, step S402 may be performed after step S404, or step S404 may be performed after step S402.

Similarly, if the network device performs step S403, both step S403 and step S404 are performed after step S401. However, an execution sequence of step S403 and step S404 is not limited in this embodiment. For example, step S403 may be performed after step S404, or step S404 may be performed after step S403.

It should be understood that, in step S404, that the terminal device releases the RRC connection may be understood as that the terminal device exits an RRC connected mode, and the terminal device may enter a state other than the RRC connected mode, for example, an idle state (idle state) or an inactive state (inactive state).

Optionally, when the access stratum security between the terminal device and the network device is not activated, the terminal device may enter the idle state.

Based on the technical solution shown in FIG. 4, the terminal device may maintain the first information indicating the last used cell of the terminal device. In a scenario in which the terminal device receives the first message indicating to release the RRC connection between the terminal device and the network device in step S401 and releases the RRC connection in step S404, when the access stratum security between the terminal device and the network device is not activated, the terminal device determines not to update the first information in step S402. When the access stratum security is not activated, the terminal device may determine that the terminal device cannot communicate with the network device based on the access stratum security mechanism. Therefore, in a manner in which the terminal device determines not to update the first information, the terminal device does not update the first information based on a cell (the cell is located in one or more cells corresponding to the network device) through which the first message is sent, so that a paging error caused by an incorrect update of the terminal device can be avoided, to enhance a PEI function implemented by the terminal device based on the first information and reduce power consumption of the terminal device.

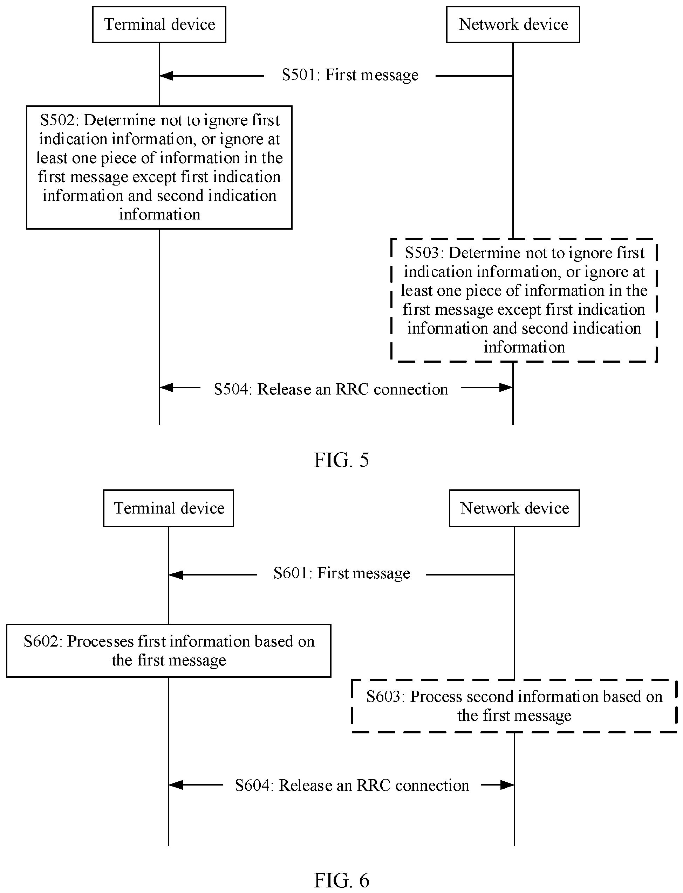

It can be learned from the embodiment shown in FIG. 4 that, when the access stratum security between the terminal device and the network device is not activated, the terminal device determines not to update the first information in step S402 (or the network device determines that the terminal device does not update the first information in step S403). In this manner, the terminal device (or the network device) may ignore related indication information (for example, the first indication information mentioned above) that is in the first message and that indicates to update (or not update) the first information. In other words, in the embodiment shown in FIG. 4, the terminal device (or the network device) may determine, by default, that the terminal device does not update the first information without reading the related indication information that is in the first message and that indicates to update (or not update) the first information, so that a paging error caused by an incorrect update of the terminal device can be avoided, to enhance a PEI function implemented by the terminal device based on the first information and reduce power consumption of the terminal device, thereby resolving the foregoing technical problem of "how to determine a last used cell of the terminal device." The following describes, with reference to the embodiments shown in FIG. 5 and FIG. 6, another embodiment provided in this application to resolve the technical problem.

It should be noted that, different from that in the implementation in the embodiment shown in FIG. 4 in which the terminal device (or the network device) determines, by default, that the terminal device does not update the first information, without reading the related indication information that is in the first message and that indicates to update (or not to update) the first information, in the following embodiments shown in FIG. 5 and FIG. 6, the terminal device (or the network device) needs to read the related indication information that is in the first message and that indicates to update (or not update) the first information, and perform a corresponding operation based on the related indication information. The following provides a detailed description with reference to the accompanying drawings.

FIG. 5 is a diagram of an implementation of a communication method according to this application.

It should be noted that, in FIG. 5, for implementation processes of step S501 and step S504, refer to the implementation processes of step S401 and step S404 in FIG. 4, and corresponding technical effects are implemented. Details are not described below.

S501: A network device sends a first message.

In this embodiment, the network device sends the first message in step S501, and correspondingly, a terminal device receives the first message in step S501. The first message indicates to release a radio resource control (radio resource control, RRC) connection between the terminal device and the network device.

S502: The terminal device determines not to ignore first indication information in the first message, or the terminal device ignores at least one piece of information in the first message except first indication information and second indication information.

In this embodiment, when access stratum (access stratum, AS) security between the terminal device and the network device is not activated, the terminal device determines, in step S502, not to ignore the first indication information in the first message, or the terminal device ignores at least one piece of information in the first message except the first indication information and the second indication information. The first indication information indicates not to update first information, the first information indicates a last used cell of the terminal device, and the second indication information indicates wait time for accessing a network.

In a possible implementation, for the network device, after the first message is sent in step S501, when the access stratum security between the terminal device and the network device is not activated, the network device determines that the terminal device (after step S501, for example, in step S502) does not ignore the first indication information in the first message, or the network device determines that the terminal device (after step S501, for example, in step S502) ignores at least one piece of information in the first message except the first indication information and the second indication information. Specifically, when the access stratum security between the terminal device and the network device is not activated, the network device may determine that the network device cannot communicate with the terminal device based on an access stratum security mechanism. In view of this, the network device determines that the terminal device does not ignore the first indication information in the first message (or the network device determines that the terminal device ignores at least one piece of information in the first message except the first indication information and the second indication information), so that the network device and the terminal device are aligned in understandings on the first information, to reduce a possibility of a communication error.

Optionally, that terminal device ignores at least one piece of information in the first message except first indication information and second indication information may include: The terminal device ignores other information in the first message except the first indication information and the second indication information.

In a possible implementation, the method further includes: The terminal device determines, based on the first indication information, not to update the first information. Specifically, a process in which the terminal device determines not to ignore the first indication information may include: The terminal device determines, based on the first indication information, not to update the first information, so that the terminal device determines, based on the first indication information sent by the network device, not to update the first information. In this way, the terminal device and the network device are aligned in understandings on the first indication information, to reduce a possibility of a communication error.

In a possible implementation, the first information includes information about the last used cell of the terminal device.

Optionally, the first information may include an identifier of the last used cell of the terminal device. For example, the identifier may be a CGI, a PCI, or the like.

In a possible implementation, when any one of the following is met, that the terminal device determines that access stratum security between the terminal device and the network device is not activated in step S502 includes: The terminal device determines that no security mode command message is received; and after the terminal device receives the security mode command message, the terminal device determines that a process of deriving a key based on the security mode command message fails; or after the terminal device receives the security mode command message, the terminal device determines that integrity protection verification corresponding to the security mode command message fails. Specifically, the terminal device may determine, in the foregoing plurality of manners, that the access stratum security between the terminal device and the network device is not activated, to improve flexibility of implementing the solution.

The foregoing describes an implementation process that may be performed by the terminal device in step S502 when the access stratum security between the terminal device and the network device is not activated. The following describes an example of an implementation process that may be performed by the network device in this case.

In a possible implementation, when the access stratum security between the terminal device and the network device is not activated, in step S503, the network device determines not to ignore the first indication information in the first message, or the network device determines to ignore at least one piece of information in the first message except the first indication information and the second indication information.

Specifically, when the access stratum security is not activated, the network device may determine that the network device cannot communicate with the terminal device based on the access stratum security mechanism. Therefore, in a manner in which the network device determines not to ignore the first indication information in the first message (or the network device ignores at least one piece of information in the first message except the first indication information and the second indication information), the network device determines that the terminal device does not update the first information based on a cell (where the cell is located in one or more cells corresponding to the network device) through which the first message is sent, so that a paging error caused by an incorrect update of the terminal device can be avoided, to enhance a PEI function implemented by the terminal device based on the first information and reduce power consumption of the terminal device.

In addition, in a manner in which the network device determines not to ignore the first indication information in the first message (or the network device ignores at least one piece of information in the first message except the first indication information and the second indication information), the terminal device and the network device may be aligned in understandings on the first indication information, to reduce a possibility of a communication error.

Optionally, that network device ignores at least one piece of information in the first message except first indication information and second indication information may include: The network device ignores information in the first message except the first indication information and the second indication information.

In a possible implementation, in the foregoing implementation, the method further includes: The network device determines, based on the first indication information, not to update second information, where the second information indicates one or more cells that have been accessed by the terminal device. Specifically, the network device may determine, based on the first indication information, not to update the second information indicating the one or more cells that have been accessed by the terminal device, so that the terminal device and the network device are aligned in understandings on the first indication information, to reduce a possibility of a communication error.

In a possible implementation, the second information includes identifiers of the one or more cells that have been accessed by the terminal device. Optionally, the identifier of the one or more cells accessed by the terminal device may be a CGI, a PCI, or the like.

In a possible implementation, in the foregoing implementation, the method further includes: The network device sends the second information to a core network device. Specifically, the network device may further send, to the core network device, the second information indicating the one or more cells that have been accessed by the terminal device, so that the core network device and the network device are aligned in understandings on the second information, to reduce a possibility of a communication error.

In a possible implementation, before step S501, the method further includes: The terminal device sends first capability information, where the first capability information indicates that the terminal device supports a paging early indication PEI. Specifically, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation, in the embodiment shown in FIG. 5 (before or after any step), the method further includes: The terminal device receives third indication information, where the third indication information indicates that the network device supports the PEI. Specifically, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

S504: Release the RRC connection between the terminal device and the network device.

In this embodiment, after the network device sends the first message in step S501, the network device releases the RRC connection to the terminal device in step S504. After the terminal device receives the first message in step S501, the terminal device releases the RRC connection to the network device in step S504.

It should be noted that both step S502 and step S504 are performed after step S501. However, an execution sequence of step S502 and step S504 is not limited in this embodiment. For example, step S502 may be performed after step S504, or step S504 may be performed after step S502.

Similarly, if the network device performs step S503, both step S503 and step S504 are performed after step S501. However, an execution sequence of step S503 and step S504 is not limited in this embodiment. For example, step S503 may be performed after step S504, or step S504 may be performed after step S503.

Based on the technical solution shown in FIG. 5, the terminal device may maintain the first information indicating the last used cell of the terminal device. In a scenario in which the terminal device receives the first message indicating to release the RRC connection between the terminal device and the network device in step S501 and releases the RRC connection in step S504, when the access stratum security between the terminal device and the network device is not activated, the terminal device determines not to ignore the first indication information in the first message or the terminal device ignores at least one piece of information in the first message in step S502 except the first indication information and the second indication information. When the access stratum security is not activated, the terminal device may determine that the terminal device cannot communicate with the network device based on an access stratum security mechanism. Therefore, in a manner in which the terminal device determines not to ignore the first indication information in the first message (or the terminal device ignores at least one piece of information in the first message except the first indication information and the second indication information), the terminal device does not update the first information based on a cell (where the cell is located in one or more cells corresponding to the network device) through which the first message is sent, so that a paging error caused by an incorrect update of the terminal device can be avoided, to enhance a PEI function implemented by the terminal device based on the first information and reduce power consumption of the terminal device.

In addition, in a manner in which the terminal device determines not to ignore the first indication information in the first message (or the terminal device ignores at least one piece of information in the first message except the first indication information and the second indication information) in step S502, the terminal device and the network device may be aligned in understandings on the first indication information, to reduce a possibility of a communication error.

FIG. 6 is a diagram of an implementation of a communication method according to this application.

It should be noted that, in FIG. 6, for implementation processes of step S601 and step S604, refer to the implementation processes of step S401 and step S404 in FIG. 4, and corresponding technical effects are implemented. Details are not described below.

S601: A network device sends a first message.

In this embodiment, the network device sends the first message in step S601, and correspondingly, a terminal device receives the first message in step S601. The first message indicates to release a radio resource control (radio resource control, RRC) connection between the terminal device and the network device.

S602: The terminal device processes first information based on the first message.

In this embodiment, when access stratum (access stratum, AS) security between the terminal device and the network device is not activated, the terminal device processes the first information based on the first message in step S602. The first information indicates a last used cell of the terminal device.

In a possible implementation, in step S602, that the terminal device processes first information based on the first message includes: When the first message includes first indication information, the terminal device determines not to update the first information, where the first indication information indicates not to update the first information. Specifically, when the first message includes the first indication information indicating not to update the first information, the terminal device determines not to update the first information, so that the terminal device performs a corresponding operation based on an indication of the network device, to reduce a possibility of a communication error.

In a possible implementation, in step S602, that the terminal device processes first information based on the first message includes: When the first message does not include first indication information, the terminal device updates the first information based on a cell corresponding to the first message, where the first indication information indicates not to update the first information. Specifically, when the first message does not include the first indication information, the terminal device updates the first information based on the cell corresponding to the first message, so that the terminal device performs a corresponding operation based on an indication of the network device, to reduce a possibility of a communication error.

It should be understood that a process in which the terminal device updates the first information based on a cell corresponding to the first message includes: The terminal device updates the first information based on a cell identifier of a cell through which the first message is sent, or the terminal device updates the first information based on a cell identifier carried in the first message. This is not limited herein. For example, in the foregoing embodiment, the terminal device updates the first information based on the cell identifier of the cell through which the first message is sent. In other words, the terminal device updates information about the last used cell indicated by the first information as the cell identifier of the cell through which the first message is sent.

In a possible implementation, the first information includes the information about the last used cell of the terminal device. Optionally, the first information may include an identifier of the last used cell of the terminal device. For example, the identifier may be a CGI, a PCI, or the like.

In a possible implementation, when any one of the following is met, that the terminal device determines that access stratum security between the terminal device and the network device is not activated in step S602 includes: The terminal device determines that no security mode command message is received; and after the terminal device receives the security mode command message, the terminal device determines that a process of deriving a key based on the security mode command message fails; or after the terminal device receives the security mode command message, the terminal device determines that integrity protection verification corresponding to the security mode command message fails. Specifically, the terminal device may determine, in the foregoing plurality of manners, that the access stratum security between the terminal device and the network device is not activated, to improve flexibility of implementing the solution.

The foregoing describes an implementation process that may be performed by the terminal device in step S602 when the access stratum security between the terminal device and the network device is not activated. The following describes an example of an implementation process that may be performed by the network device in this case.

In a possible implementation, after the network device sends the first message in step S601, the network device determines, based on the first message, whether the terminal device updates the first information. Specifically, the network device may further determine, based on the first message, whether the terminal device updates the first information, so that the network device determines behavior of the terminal device, to avoid a communication error.

In a possible implementation, when the network device has sent the first message in step S601 and the access stratum security between the terminal device and the network device is not activated, in step S603, the network device processes second information based on the first message, where the second information indicates one or more cells that have been accessed by the terminal device.

Specifically, the network device may maintain the second information indicating the one or more cells that have been accessed by the terminal device. In a scenario in which the network device sends the first message indicating to release the RRC connection between the terminal device and the network device and releases the RRC connection, the network device processes the second information based on the first message. When the access stratum security is not activated, the network device may determine that the terminal device cannot communicate with the network device based on an access stratum security mechanism. Therefore, in a manner in which the network device processes the first information based on the first message, the terminal device and the network device are aligned in understandings on the first message, to reduce a possibility of a communication error.

Optionally, similar to the implementation process of the terminal device in step S602, that the network device processes second information based on the first message includes: When the first message includes first indication information, the network device determines not to update the second information, where the first indication information indicates not to update the first information, and the first information indicates the information about the last used cell of the terminal device. Specifically, when the first message includes the first indication information indicating not to update the first information, the network device determines not to update the second information, so that the terminal device subsequently performs a corresponding operation based on an indication of the network device, to reduce a possibility of a communication error.

Optionally, similar to the implementation process of the terminal device in step S602, that the terminal device processes first information based on the first message includes: When the first message does not include first indication information, the terminal device updates the second information based on a cell corresponding to the first message, where the first indication information indicates not to update the first information, and the first information indicates information about the last used cell of the terminal device. Specifically, when the first message does not include the first indication information, the network device updates the second information based on the cell corresponding to the first message, so that the terminal device subsequently performs a corresponding operation based on an indication of the network device, to reduce a possibility of a communication error.

It should be understood that a process in which the network device updates the second information based on the cell corresponding to the first message includes: The network device updates the second information based on a cell identifier of a cell through which the first message is sent, or the network device updates the second information based on a cell identifier carried in the first message. This is not limited herein.

In a possible implementation, the method further includes: The network device sends the second information to a core network device. Specifically, the network device may further send, to the core network device, the second information indicating the one or more cells that have been accessed by the terminal device, so that the core network device and the network device are aligned in understandings on the second information, to reduce a possibility of a communication error.

In a possible implementation, before step S601, the method further includes: The terminal device sends first capability information, where the first capability information indicates that the terminal device supports a PEI. Specifically, the terminal device may send, to the network device, the first capability information indicating that the terminal device supports the PEI, so that the network device determines, based on the first capability information, that the terminal device supports the PEI, and communicates with the terminal device based on a PEI mechanism.

In a possible implementation, in the embodiment shown in FIG. 6 (before or after any step), the method further includes: The terminal device receives third indication information, where the third indication information indicates that the network device supports the PEI. Specifically, the network device may send, to the terminal device, the third indication information indicating that the network device supports the PEI, so that the terminal device determines, based on the third indication information, that the network device supports the PEI, and communicates with the network device based on the PEI mechanism.

Optionally, in addition to the foregoing implementation of interaction between the first capability information and the third indication information, the terminal device and the network device may further learn of capability information of each other in another implementation. For example, in an implementation of interaction between the terminal device and another device, the another device may be a core network device, a sidelink (sidelink) device, a server, or the like. For another example, an implementation is pre-configured by using a protocol/standard.

S604: Release the RRC connection between the terminal device and the network device.

In this embodiment, after the network device sends the first message in step S601, the network device releases the RRC connection to the terminal device in step S604. After the terminal device receives the first message in step S601, the terminal device releases the RRC connection to the network device in step S604.

It should be noted that both step S602 and step S604 are performed after step S601. However, an execution sequence of step S602 and step S604 is not limited in this embodiment. For example, step S602 may be performed after step S604, or step S604 may be performed after step S602.

Similarly, if the network device performs step S603, both step S603 and step S604 are performed after step S601. However, an execution sequence of step S603 and step S604 is not limited in this embodiment. For example, step S603 may be performed after step S604, or step S604 may be performed after step S603.

Based on the technical solution shown in FIG. 6, the terminal device may maintain the first information indicating the last used cell of the terminal device. In a scenario in which the terminal device receives the first message indicating to release the RRC connection between the terminal device in step S601 and the network device and releases the RRC connection in step S604, the terminal device processes the first information based on the first message in step S602. When the access stratum security is not activated, the terminal device may determine that the terminal device cannot communicate with the network device based on an access stratum security mechanism. Therefore, in a manner in which the terminal device processes the first information based on the first message, the terminal device and the network device are aligned in understandings on the first message, to reduce a possibility of a communication error.

It can be learned from the implementation processes shown in FIG. 4 to FIG. 6 that, in the implementation shown in FIG. 4, when the AS security is not activated, the terminal device ignores the first indication information in the first message, and does not update the first information. In this way, the first information is not updated to an inappropriate cell, to enhance a PEI function of UE, and reduce energy consumption. In the implementations shown in FIG. 5 and FIG. 6, when the AS security is not activated, the first indication information in the first message is not ignored, and it is still determined, based on the first indication information in the first message, not to update the first information. In this way, the first information is not updated to an inappropriate cell, to enhance a PEI function of the terminal device and reduce energy consumption.

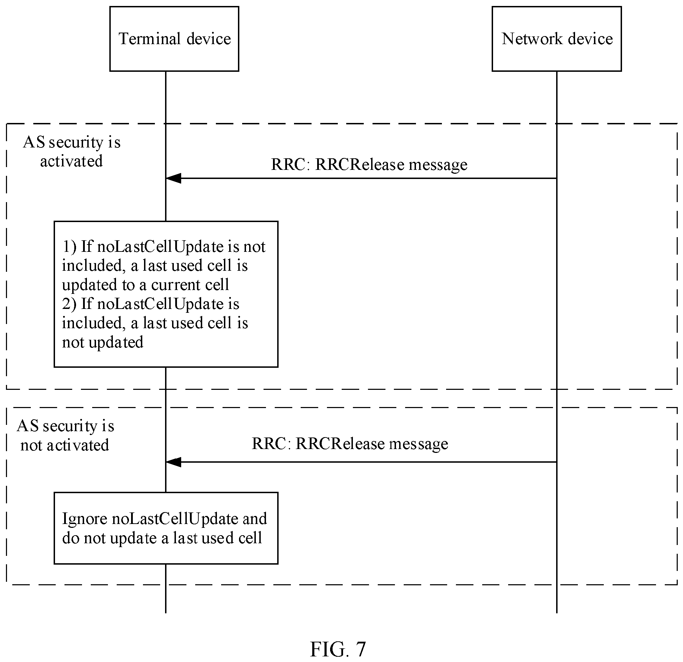

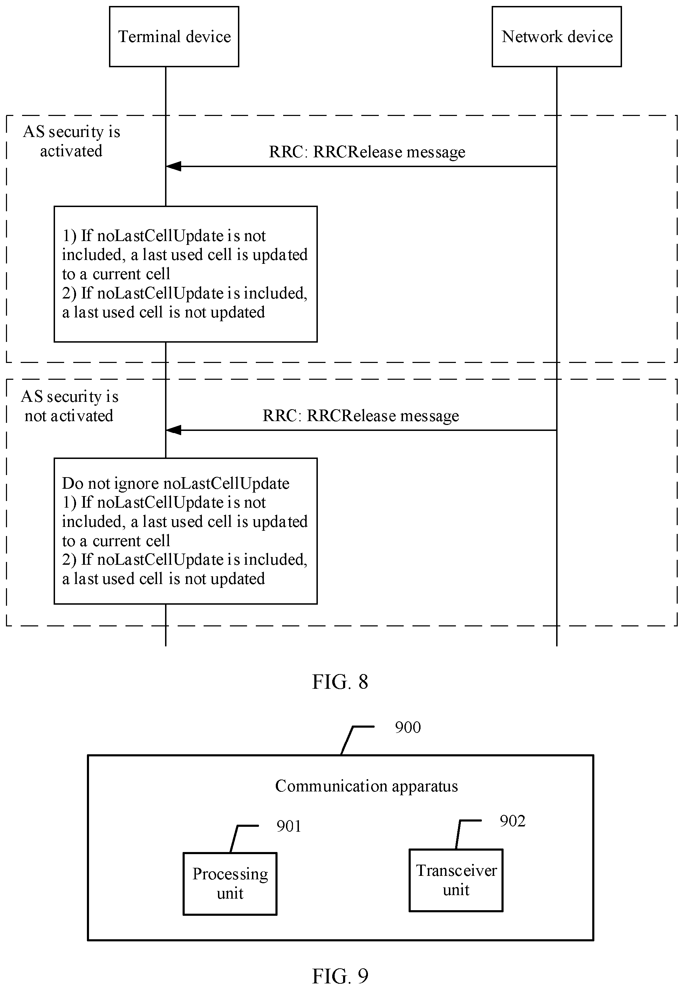

The following describes the embodiment shown in FIG. 4 by using an example with reference to the implementation process shown in FIG. 7, and describes the embodiments shown in FIG. 5 and FIG. 6 by using an example with reference to the implementation process shown in FIG. 8.

It should be understood that, in the implementation examples shown in FIG. 7 and FIG. 8, the first message is an RRCRelease message, and the first indication information in the first message is a noLastCellUpdate information element/field/domain/parameter. An example in which the first information is a last used cell information element/field/-field/parameter is used for description.

As shown in FIG. 7, in an implementation example of the embodiment shown in FIG. 4, the implementation example includes the following process.

1. If the AS security has been activated, a terminal device that supports a PEI capability updates the last used cell based on noLastCellUpdate in an RRCRelease message over an air interface.

If noLastCellUpdate is not included, the terminal device updates the last used cell to a current cell.

If noLastCellUpdate is included, the terminal device does not update the last used cell.

2. If the AS security is not activated, the terminal device directly ignores the noLastCellUpdate information element, and does not update the last used cell.

It can be learned from the embodiment shown in FIG. 7 that, in the scenario 1 shown in FIG. 3a, after the terminal device receives the RRCRelease message over an air interface from the fake base station, because the AS security is not activated, the last used cell can be prevented from being updated to a cell served by the fake base station. In the scenario 2 shown in FIG. 3b, in a scenario in which an access network element or a core network element is temporarily overloaded, because a connection cannot be established between the access network element or the core network element, the AS security is not activated. After the RRCRelease message over an air interface is received, the last used cell is prevented from being updated to a cell served by an overloaded base station. Therefore, a PEI function of the terminal device can be enhanced, and power saving performance of the terminal device can be ensured. In addition, when the AS security is not activated, the terminal device directly ignores noLastCellUpdate, and does not update the last used cell. In this way, the last used cell is not updated to an inappropriate cell.

As shown in FIG. 8, in an implementation example of the embodiments shown in FIG. 5 and FIG. 6, the implementation example includes the following process.

1. If the AS security has been activated, a terminal device that supports a PEI capability updates the last used cell based on noLastCellUpdate in an RRCRelease message over an air interface.

If noLastCellUpdate is not included, the terminal device updates the last used cell to a current cell.

If noLastCellUpdate is included, the terminal device does not update the last used cell.

2. If the AS security is not activated, the noLastCellUpdate information element in the RRCRelease message over an air interface is not ignored and the last used cell is still updated based on the noLastCellUpdate information element.

If noLastCellUpdate is not included, the terminal device updates the last used cell to a current cell.

If noLastCellUpdate is included, the terminal device does not update the last used cell.

It can be learned from the embodiment in FIG. 8, in the scenario 2 shown in FIG. 3b, in the scenario in which an access network element or a core network element is temporarily overloaded, because a connection cannot be established between the access network element or the core network element, the AS security is not activated. After the RRCRelease message over an air interface is received, the last used cell is prevented from being updated to a cell served by an overloaded base station. Therefore, a PEI function of the terminal device can be enhanced, and power saving performance of the terminal device can be ensured. In addition, when the AS security is not activated, the terminal device does not ignore noLastCellUpdate, and still updates the last used cell based on noLastCellUpdate. In this way, the last used cell is not updated to an inappropriate cell because a gNB or a core network is temporarily overloaded.

The foregoing describes this application from a perspective of the method. The following describes a communication apparatus provided in this application.

Refer to FIG. 9. An embodiment of this application provides a communication apparatus 900. The communication apparatus 900 can implement a function of the terminal device or the network device in the foregoing method embodiments, and therefore can also achieve beneficial effects of the foregoing method embodiments. In this embodiment of this application, the communication apparatus 900 may be the terminal device or the network device, or may be an integrated circuit, an element, or the like inside the terminal device or the network device, for example, a chip. In the following embodiments, an example in which the communication apparatus 900 is the terminal device or the network device is used for description.

In a possible implementation, when the apparatus 900 is configured to perform the method performed by the terminal device in the foregoing embodiments, the apparatus includes a processing unit 901 and a transceiver unit 902. When the transceiver unit 902 receives a first message and access stratum security between the terminal device and the network device is not activated, the processing unit 901 determines not to update first information, where the first information indicates a last used cell of the terminal device, and the first message indicates to release a radio resource control RRC connection between the terminal device and the network device. The processing unit 901 releases the RRC connection.

In a possible implementation, the first message includes first indication information, and the first indication information indicates not to update the first information. When the access stratum security between the terminal device and the network device is not activated, the processing unit 901 is further configured to ignore the first indication information.

In a possible implementation, the first message includes second indication information, and the second indication information indicates wait time for accessing a network. The processing unit 901 is further configured to ignore at least one piece of information in the first message except the second indication information, where the at least one piece of information includes the first indication information, and the first indication information indicates not to update the first information.

In a possible implementation, the first information includes information about the last used cell of the terminal device.

In a possible implementation, when any one of the following is met, that the processing unit 901 determines that access stratum security between the terminal device and the network device is not activated includes: The processing unit 901 determines that a security mode command message is not received; and after the transceiver unit 902 receives the security mode command message, the processing unit 901 determines that a process of deriving a key based on the security mode command message fails; or after the transceiver unit 902 receives the security mode command message, the processing unit 901 determines that integrity protection verification corresponding to the security mode command message fails.

In a possible implementation, the transceiver unit 902 is further configured to send first capability information, where the first capability information indicates that the terminal device supports a paging advance indication PEI.

In a possible implementation, the transceiver unit 902 is further configured to receive third indication information, where the third indication information indicates that the network device supports the PEI.

In a possible implementation, when the apparatus 900 is configured to perform the method performed by the network device in the foregoing embodiments, the apparatus includes a processing unit 901 and a transceiver unit 902. When the transceiver unit 902 has sent a first message and access stratum security between the terminal device and the network device is not activated, the processing unit 901 determines not to update second information, where the second information indicates one or more cells that have been accessed by the terminal device, and the first message indicates to release a radio resource control RRC connection between the terminal device and the network device. The processing unit 901 releases the RRC connection.

In a possible implementation, the first message includes first indication information, the first indication information indicates not to update the first information, and the first information indicates the last used cell of the terminal device. When the access stratum security between the terminal device and the network device is not activated, the processing unit 901 determines that the terminal device ignores the first indication information.

In a possible implementation, the first message includes second indication information, and the second indication information indicates wait time for accessing a network. When the access stratum security between the terminal device and the network device is not activated, the processing unit 901 determines that the terminal device ignores at least one piece of information in the first message except the second indication information, where the at least one piece of information includes first indication information, the first indication information indicates not to update the first information, and the first information indicates the last used cell of the terminal device.

In a possible implementation, when the access stratum security between the terminal device and the network device is not activated, the processing unit 901 determines that the terminal device does not update the first information, where the first information indicates the last used cell of the terminal device.

In a possible implementation, the first information includes information about the last used cell of the terminal device.

In a possible implementation, the second information includes identifiers of the one or more cells that have been accessed by the terminal device.

In a possible implementation, the transceiver unit 902 is further configured to send the second information to a core network device.

In a possible implementation, the transceiver unit 902 is further configured to send third indication information, where the third indication information indicates that the network device supports the PEI.

In a possible implementation, when the apparatus 900 is configured to perform the method performed by the terminal device in the foregoing embodiments, the apparatus includes a processing unit 901 and a transceiver unit 902. When the transceiver unit 902 receives a first message and access stratum security between the terminal device and a network device is not activated, the processing unit 901 determines not to ignore first indication information in the first message, or the processing unit 901 ignores at least one piece of information in the first message except first indication information and second indication information, where the first message indicates to release a radio resource control RRC connection between the terminal device and the network device, the first indication information indicates not to update first information, the first information indicates a last used cell of the terminal device, and the second indication information indicates wait time for accessing a network. The processing unit 901 releases the RRC connection.

In a possible implementation, the processing unit 901 is further configured to determine, based on the first indication information, not to update the first information.

In a possible implementation, the first information includes information about the last used cell of the terminal device.

In a possible implementation, when any one of the following is met, that the processing unit 901 determines that access stratum security between the terminal device and the network device is not activated includes: The processing unit 901 determines that a security mode command message is not received; and after the transceiver unit 902 receives the security mode command message, the processing unit 901 determines that a process of deriving a key based on the security mode command message fails; or after the transceiver unit 902 receives the security mode command message, the processing unit 901 determines that integrity protection verification corresponding to the security mode command message fails.

In a possible implementation, the transceiver unit 902 is further configured to send first capability information, where the first capability information indicates that the terminal device supports a paging advance indication PEI.

In a possible implementation, the transceiver unit 902 is further configured to receive third indication information, where the third indication information indicates that the network device supports the PEI.

In a possible implementation, when the apparatus 900 is configured to perform the method performed by the network device in the foregoing embodiments, the apparatus includes a processing unit 901 and a transceiver unit 902. When the transceiver unit 902 has sent a first message and access stratum security between the network device and the terminal device is not activated, the processing unit 901 determines not to ignore first indication information in the first message, or the processing unit 901 ignores at least one piece of information in the first message except first indication information and second indication information, where the first message indicates to release a radio resource control RRC connection between the terminal device and the network device, the first indication information indicates not to update first information, the first information indicates a last used cell of the terminal device, and the second indication information indicates wait time for accessing a network. The processing unit 901 releases the RRC connection.

In a possible implementation, the processing unit 901 is further configured to determine, based on the first indication information, not to update second information, where the second information indicates one or more cells that have been accessed by the terminal device.

In a possible implementation, the second information includes identifiers of the one or more cells that have been accessed by the terminal device.

In a possible implementation, the first information includes information about the last used cell of the terminal device.

In a possible implementation, when the access stratum security between the terminal device and the network device is not activated, the processing unit 901 determines that the terminal device does not ignore the first indication information in the first message, or the processing unit 901 determines that the terminal device ignores at least one piece of information in the first message except first indication information and second indication information.

In a possible implementation, the transceiver unit 902 is further configured to send the second information to a core network device.

In a possible implementation, the transceiver unit 902 is further configured to receive first capability information, where the first capability information indicates that the terminal device supports a paging advance indication PEI.

In a possible implementation, the transceiver unit 902 is further configured to send third indication information, where the third indication information indicates that the network device supports the PEI.

In a possible implementation, when the apparatus 900 is configured to perform the method performed by the terminal device in the foregoing embodiments, the apparatus includes a processing unit 901 and a transceiver unit 902. When the transceiver unit 902 receives a first message and access stratum security between the terminal device and the network device is not activated, the processing unit 901 processes first information based on the first message, where the first information indicates information about a last used cell of the terminal device, and the first message indicates to release a radio resource control RRC connection between the terminal device and the network device. The processing unit 901 releases the RRC connection.

In a possible implementation, that the processing unit 901 processes first information based on the first message includes: When the first message includes first indication information, the processing unit 901 determines not to update the first information, where the first indication information indicates not to update the first information.

In a possible implementation, that the processing unit 901 processes first information based on the first message includes: When the first message does not include first indication information, the processing unit 901 updates the first information based on a cell corresponding to the first message, where the first indication information indicates not to update the first information.

In a possible implementation, the first information includes information about the last used cell of the terminal device.

In a possible implementation, when any one of the following is met, that the processing unit 901 determines that access stratum security between the terminal device and the network device is not activated includes: The processing unit 901 determines that a security mode command message is not received; and after the transceiver unit 902 receives the security mode command message, the processing unit 901 determines that a process of deriving a key based on the security mode command message fails; or after the transceiver unit 902 receives the security mode command message, the processing unit 901 determines that integrity protection verification corresponding to the security mode command message fails.

In a possible implementation, the transceiver unit 902 is further configured to send first capability information, where the first capability information indicates that the terminal device supports a paging advance indication PEI.

In a possible implementation, the transceiver unit 902 is further configured to receive third indication information, where the third indication information indicates that the network device supports the PEI.

In a possible implementation, when the apparatus 900 is configured to perform the method performed by the network device in the foregoing embodiments, the apparatus includes a processing unit 901 and a transceiver unit 902. When the transceiver unit 902 has sent a first message and access stratum security between the terminal device and the network device is not activated, the processing unit 901 processes second information based on the first message, where the second information indicates one or more cells that have been accessed by the terminal device, and the first message indicates to release a radio resource control RRC connection between the terminal device and the network device. The processing unit 901 releases the RRC connection.

In a possible implementation, that the processing unit 901 processes second information based on the first message includes: When the first message includes first indication information, the processing unit 901 determines not to update the second information, where the first indication information indicates not to update first information, and the first information indicates information about a last used cell of the terminal device.

In a possible implementation, that the processing unit 901 processes first information based on the first message includes: When the first message does not include first indication information, the processing unit 901 updates the second information based on a cell corresponding to the first message, where the first indication information indicates not to update the first information, and the first information indicates information about a last used cell of the terminal device.

In a possible implementation, the first information includes information about the last used cell of the terminal device.

In a possible implementation, the second information includes identifiers of the one or more cells that have been accessed by the terminal device.

In a possible implementation, the processing unit 901 determines, based on the first message, whether the terminal device updates the first information.

In a possible implementation, the transceiver unit 902 is further configured to receive first capability information, where the first capability information indicates that the terminal device supports a paging advance indication PEI.

In a possible implementation, the transceiver unit 902 is further configured to send third indication information, where the third indication information indicates that the network device supports the PEI.

It should be noted that for content such as an information execution process of the units of the communication apparatus 900, specifically refer to the descriptions in the foregoing method embodiments of this application. Details are not described herein again.

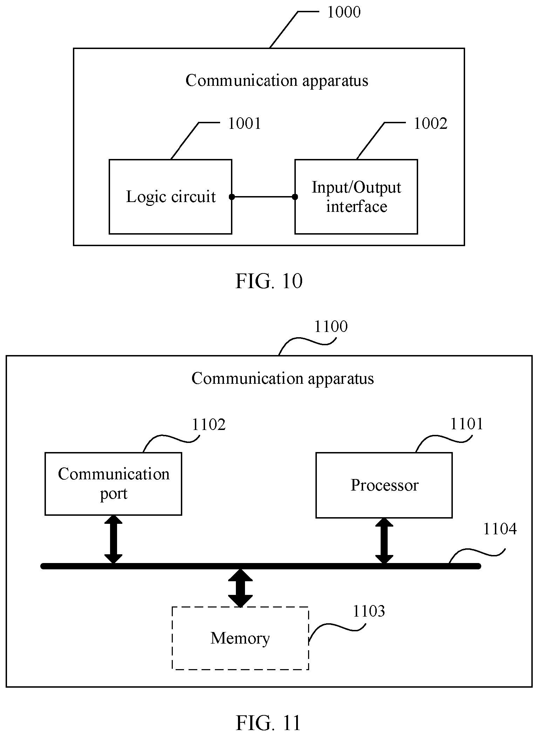

FIG. 10 is another diagram of a structure of a communication apparatus 1000 according to this application. The communication apparatus 1000 includes at least an input/output interface 1002. The communication apparatus 1000 may be a chip or an integrated circuit.

Optionally, the communication apparatus further includes a logic circuit 1001.

The transceiver unit 902 shown in FIG. 9 may be a communication interface. The communication interface may be the input/output interface 1002 in FIG. 10, and the input/output interface 1002 may include an input interface and an output interface. Alternatively, the communication interface may be a transceiver circuit, and the transceiver circuit may include an input interface circuit and an output interface circuit.

Optionally, when the communication apparatus 1000 is the terminal device (or the component in the device) in the foregoing embodiment, and the input/output interface 1002 receives a first message and access stratum security between the terminal device and the network device is not activated, the logic circuit 1001 determines not to update first information, where the first information indicates a last used cell of the terminal device, and the first message indicates to release a radio resource control RRC connection between the terminal device and the network device. The logic circuit 1001 releases the RRC connection.

Optionally, when the communication apparatus 1000 is the network device (or the component in the device) in the foregoing embodiment, and the input/output interface 1002 has sent a first message and access stratum security between the terminal device and the network device is not activated, the logic circuit 1001 determines not to update second information, where the second information indicates one or more cells that have been accessed by the terminal device, and the first message indicates to release a radio resource control RRC connection between the terminal device and the network device. The logic circuit 1001 releases the RRC connection.

Optionally, when the communication apparatus 1000 is the terminal device (or the component in the device) in the foregoing embodiment, and the input/output interface 1002 receives a first message and access stratum security between the terminal device and the network device is not activated, the logic circuit 1001 determines not to ignore first indication information in the first message, or the logic circuit 1001 ignores at least one piece of information in the first message except first indication information and second indication information. The first message indicates to release a radio resource control RRC connection between the terminal device and the network device, the first indication information indicates not to update first information, the first information indicates a last used cell of the terminal device, and the second indication information indicates wait time for accessing a network. The logic circuit 1001 releases the RRC connection.

Optionally, when the communication apparatus 1000 is the network device (or the component in the device) in the foregoing embodiment, and the input/output interface 1002 has sent a first message and access stratum security between the terminal device and the network device is not activated, the logic circuit 1001 determines not to ignore first indication information in the first message, or the logic circuit 1001 ignores at least one piece of information in the first message except first indication information and second indication information. The first message indicates to release a radio resource control RRC connection between the terminal device and the network device, the first indication information indicates not to update first information, the first information indicates a last used cell of the terminal device, and the second indication information indicates wait time for accessing a network. The logic circuit 1001 releases the RRC connection.

Optionally, when the communication apparatus 1000 is the terminal device (or the component in the device) in the foregoing embodiment, and the input/output interface 1002 receives a first message and access stratum security between the terminal device and the network device is not activated, the logic circuit 1001 processes first information based on the first message, where the first information indicates information about a last used cell of the terminal device, and the first message indicates to release a radio resource control RRC connection between the terminal device and the network device. The logic circuit 1001 releases the RRC connection.

Optionally, when the communication apparatus 1000 is the network device (or the component in the device) in the foregoing embodiment, and the input/output interface 1002 has sent a first message and access stratum security between the terminal device and the network device is not activated, the logic circuit 1001 processes second information based on the first message, where the second information indicates one or more cells that have been accessed by the terminal device, and the first message indicates to release a radio resource control RRC connection between the terminal device and the network device. The logic circuit 1001 releases the RRC connection.

The logic circuit 1001 and the input/output interface 1002 may further perform other steps performed by the network device in any one of the embodiments, and achieve corresponding beneficial effects. Details are not described herein again.

In a possible implementation, the processing unit 901 shown in FIG. 9 may be the logic circuit 1001 in FIG. 10.

Optionally, the logic circuit 1001 may be a processing apparatus, and some or all of functions of the processing apparatus may be implemented by software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGAs), application-specific integrated circuits (application-specific integrated circuits, ASICs), system on chips (system on chips, SoCs), central processing units (central processing units, CPUs), network processors (network processors, NPs), digital signal processors (digital signal processors, DSPs), micro controller units (micro controller units, MCUs), programmable logic devices (programmable logic devices, PLDs) or other integrated chips, or any combination of the foregoing chips or processors.

FIG. 11 shows a communication apparatus 1100 in the foregoing embodiments according to an embodiment of this application. The communication apparatus 1100 may be specifically a communication apparatus serving as a terminal device in the foregoing embodiments. An example shown in FIG. 11 is that the terminal device is implemented as the terminal device (or a component in the terminal device).

In a possible diagram of a logic structure of the communication apparatus 1100, the communication apparatus 1100 may include but is not limited to at least one processor 1101 and a communication port 1102.

Further, optionally, the apparatus may include at least one of a memory 1103 and a bus 1104. In this embodiment of this application, the at least one processor 1101 is configured to perform control processing on an action of the communication apparatus 1100.

In addition, the processor 1101 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logic blocks, modules, and circuits described with reference to content disclosed in this application. Alternatively, the processor may be a combination of processors implementing a computing function, for example, a combination of one or more microprocessors, or a combination of the digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that, the communication apparatus 1100 shown in FIG. 11 may be specifically configured to implement steps implemented by the terminal device in the foregoing method embodiments, and implement technical effects corresponding to the terminal device. For a specific implementation of the communication apparatus shown in FIG. 11, refer to the descriptions in the foregoing method embodiments. Details are not described herein again.

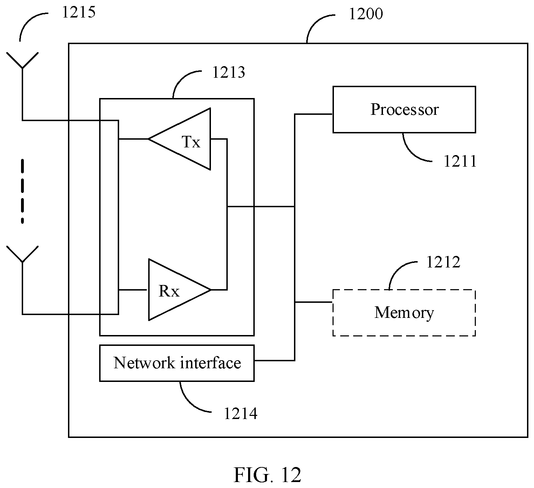

FIG. 12 is a diagram of a structure of a communication apparatus 1200 in the foregoing embodiments according to an embodiment of this application. The communication apparatus 1200 may be specifically a communication apparatus used as the network device in the foregoing embodiments. In an example shown in FIG. 12, the network device is implemented by using a network device (or a component in the network device). For a structure of the communication apparatus, refer to the structure shown in FIG. 12.

The communication apparatus 1200 includes at least one processor 1211 and at least one network interface 1214. Further, optionally, the communication apparatus includes at least one memory 1212, at least one transceiver 1213, and one or more antennas 1215. The processor 1211, the memory 1212, the transceiver 1213, and the network interface 1214 are connected, for example, through a bus. In this embodiment of this application, the connection may include various interfaces, transmission lines, buses, or the like. This is not limited in this embodiment. The antenna 1215 is connected to the transceiver 1213. The network interface 1214 is configured to enable the communication apparatus to communicate with another communication device through a communication link. For example, the network interface 1214 may include a network interface between the communication apparatus and a core network device, for example, an S1 interface. The network interface may include a network interface between the communication apparatus and another communication apparatus (for example, another network device or core network device), for example, an X2 or Xn interface.

The processor 1211 is mainly configured to: process a communication protocol and communication data; and control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1211 in FIG. 12. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of software program, and the processor executes the software program to implement a baseband processing function.

The memory is mainly configured to store the software program and data. The memory 1212 may exist independently, and is connected to the processor 1211. Optionally, the memory 1212 may alternatively be integrated with the processor 1211. For example, the memory 1212 and the processor 1211 are integrated into one chip. The memory 1212 can store program code for executing the technical solution in embodiments of this application, and the processor 1211 controls execution of the program code. Various types of executed computer program code may also be considered as drivers of the processor 1211.

FIG. 12 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1213 may be configured to support receiving or sending of a radio frequency signal between the communication apparatus and a terminal, and the transceiver 1213 may be connected to the antenna 1215. The transceiver 1213 includes a transmitter Tx and a receiver Rx. Specifically, the one or more antennas 1215 may receive radio frequency signals. The receiver Rx of the transceiver 1213 is configured to: receive the radio frequency signal from the antenna, convert the radio frequency signal into a digital baseband signal or a digital intermediate frequency signal, and provide the digital baseband signal or the digital intermediate frequency signal to the processor 1211, so that the processor 1211 performs further processing, for example, demodulation processing and decoding processing, on the digital baseband signal or the digital intermediate frequency signal. In addition, the transmitter Tx of the transceiver 1213 is further configured to: receive a modulated digital baseband signal or a modulated digital intermediate frequency signal from the processor 1211, convert the modulated digital baseband signal or the modulated digital intermediate frequency signal into a radio frequency signal, and send the radio frequency signal through the one or more antennas 1215. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital medium-frequency signal may be collectively referred to as a digital signal.

The transceiver 1213 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmit circuit, or the like.

It should be noted that the communication apparatus 1200 shown in FIG. 12 may be specifically configured to implement steps implemented by the network device in the foregoing method embodiments, and achieves technical effects corresponding to these achieved by the network device. For specific implementations of the communication apparatus 1200 shown in FIG. 12, refer to descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the possible implementations of the foregoing terminal device.

An embodiment of this application further provides a computer program product storing one or more computers. When the computer program product is executed by a processor, the processor performs the method in the possible implementations of the foregoing network device.

An embodiment of this application further provides a chip system. The chip system includes at least one processor, configured to support a communication apparatus in implementing a function in the possible implementations of the foregoing communication apparatus. Optionally, the chip system further includes an interface circuit, and the interface circuit provides program instructions and/or data for the at least one processor. In a possible design, the chip system may further include a memory. The memory is configured to store to program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing a function in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the described apparatus embodiment is merely an example. For example, division into the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of embodiments.

Functional units in embodiments of this application may be integrated into one processing unit, or each of the units may exist alone physically, or two or more units are integrated into one unit. The integrated unit may be implemented in a form of hardware, or may be implemented in a form of a software functional unit. When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A communication method, comprising:

   when a terminal device receives a first message and access stratum security between the terminal device and the network device is not activated, determining not to update first information, wherein the first information indicates a last used cell of the terminal device, and the first message indicates to release a radio resource control RRC connection between the terminal device and the network device; and
   releasing the RRC connection.

2. The method according to claim 1, wherein the first message comprises first indication information, and the first indication information indicates not to update the first information; and the method further comprises:
   when the access stratum security between the terminal device and the network device is not activated, ignoring the first indication information.

3. The method according to claim 1 or 2, wherein the first message comprises second indication information, and the second indication information indicates wait time for accessing a network; and the method further comprises:
   ignoring at least one piece of information in the first message except the second indication information, wherein the at least one piece of information comprises the first indication information, and the first indication information indicates not to update the first information.

4. The method according to any one of claims 1 to 3, wherein the first information comprises information about the last used cell of the terminal device.

5. A communication method, comprising:

   when a network device has sent a first message and access stratum security between a terminal device and the network device is not activated, determining not to update second information, wherein the second information indicates one or more cells that have been accessed by the terminal device, and the first message indicates to release a radio resource control RRC connection between the terminal device and the network device; and
   releasing the RRC connection.

6. The method according to claim 5, wherein the first message comprises first indication information, the first indication information indicates not to update first information, and the first information indicates a last used cell of the terminal device; and the method further comprises:
   when the access stratum security between the terminal device and the network device is not activated, determining that the terminal device ignores the first indication information.

7. The method according to claim 5 or 6, wherein the first message comprises second indication information, and the second indication information indicates wait time for accessing a network; and the method further comprises:
   when the access stratum security between the terminal device and the network device is not activated, determining that the terminal device ignores at least one piece of information in the first message except the second indication information, wherein the at least one piece of information comprises the first indication information, the first indication information indicates not to update the first information, and the first information indicates the last used cell of the terminal device.

8. The method according to any one of claims 5 to 7, wherein the method further comprises:
   when the access stratum security between the terminal device and the network device is not activated, determining that the terminal device does not update the first information, wherein the first information indicates the last used cell of the terminal device.

9. The method according to any one of claims 5 to 8, wherein the first information comprises information about the last used cell of the terminal device.

10. The method according to any one of claims 5 to 9, wherein the second information comprises identifiers of the one or more cells that have been accessed by the terminal device.

11. A communication method, comprising:

when a terminal device receives a first message and access stratum security between the terminal device and the network device is not activated, determining not to ignore first indication information in the first message, or ignoring at least one piece of information in the first message except first indication information and second indication information, wherein

the first message indicates to release a radio resource control RRC connection between the terminal device and the network device, the first indication information indicates not to update first information, the first information indicates a last used cell of the terminal device, and the second indication information indicates wait time for accessing a network; and

releasing the RRC connection.

12. The method according to claim 11, wherein the method further comprises:
determining, by the terminal device based on the first indication information, not to update the first information.

13. The method according to claim 11 or 12, wherein the first information comprises information about the last used cell of the terminal device.

14. A communication method, comprising:

when a network device has sent a first message and access stratum security between a terminal device and the network device is not activated, determining not to ignore first indication information in the first message, or ignoring at least one piece of information in the first message except first indication information and second indication information, wherein

the first message indicates to release a radio resource control RRC connection between the terminal device and the network device, the first indication information indicates not to update first information, the first information indicates a last used cell of the terminal device, and the second indication information indicates wait time for accessing a network; and

releasing the RRC connection.

15. The method according to claim 14, wherein the method further comprises:
determining, based on the first indication information, not to update second information, wherein the second information indicates one or more cells that have been accessed by the terminal device.

16. The method according to claim 15, wherein the second information comprises identifiers of the one or more cells that have been accessed by the terminal device.

17. The method according to any one of claims 14 to 16, wherein the first information comprises information about the last used cell of the terminal device.

18. The method according to any one of claims 14 to 17, wherein the method further comprises:
when the access stratum security between the terminal device and the network device is not activated, determining that the terminal device does not ignore the first indication information in the first message, or determining, by the network device, that the terminal device ignores the at least one piece of information in the first message except the first indication information and the second indication information.

19. A communication apparatus, comprising a processing unit and a transceiver unit, wherein
the processing unit and the transceiver unit are configured to perform the method according to any one of claims 1 to 18.

20. A communication apparatus, comprising a logic circuit and an input/output interface, wherein
the logic circuit and the input/output interface are configured to perform the method according to any one of claims 1 to 18.

21. A communication apparatus, comprising at least one processor, wherein the at least one processor is coupled to a memory;

the memory is configured to store a program and/or instructions; and
the at least one processor is configured to enable, based on the program and/or the instructions, the communication apparatus to perform the method according to any one of claims 1 to 18.

22. A computer-readable storage medium, wherein the medium stores instructions, and when the instructions are executed by a computer, the method according to any one of claims 1 to 18 is implemented.

23. A computer program product, comprising instructions, wherein when the instructions are run on a computer, the computer is enabled to perform the method according to any one of claims 1 to 18.

24. A communication system, wherein the communication system comprises a terminal device and a network device, wherein
the terminal device is configured to perform the method according to any one of claims 1 to 4, and the network device is configured to perform the method according to any one of claims 5 to 10; or the terminal device is configured to perform the method according to any one of claims 11 to 13, and the network device is configured to perform the method according to any one of claims 14 to 18.

FIG. 1a

FIG. 1b

MME/S-GW                MME/S-GW

EPC

S1-U        S1-U          S1-U
S1-U

E-UTRAN

S1      S1        S1      S1

X2-U

en-gNB                          en-gNB

X2                    X2

X2

eNB                  eNB

FIG. 1c

| Terminal device | Access network element | Core network element |

NGAP: Paging

RRC: Paging

FIG. 2a

UE subgroup 1: UE 1 and UE 4    UE subgroup 1: UE x and UE y
UE subgroup 2: UE 2 and UE 3    UE subgroup 2: UE m and UE n
...                                                          ...
UE subgroup M: UE i and UE j    UE subgroup M: UE p and UE q

| PEI | | PO | | PO |

| 1 | 0 | ... | 1 | 0 | 1 | ... | 1 | ... |

Subgroup        Subgroup
indication      indication
M subgroups  M subgroups

**FIG. 2b**

Common cell A                Fake base station cell B

PEI-capable UE

**FIG. 3a**

Common cell A            Common cell B

PEI-capable UE

FIG. 3b

Terminal device                    Network device

S401: First message

S402: Determine not to update first information

S403: Determine that the terminal device does not update the first information

S404: Release an RRC connection

FIG. 4

Terminal device

Network device

S501: First message

S502: Determine not to ignore first indication information, or ignore at least one piece of information in the first message except first indication information and second indication information

S503: Determine not to ignore first indication information, or ignore at least one piece of information in the first message except first indication information and second indication information

S504: Release an RRC connection

FIG. 5

Terminal device

Network device

S601: First message

S602: Processes first information based on the first message

S603: Process second information based on the first message

S604: Release an RRC connection

FIG. 6

FIG. 7

```
┌─────────────────┐                              ┌─────────────────┐
│ Terminal device │                              │ Network device  │
└─────────────────┘                              └─────────────────┘
         │                                                │
┌ ─ ─ ─ ─│─ ─ ─ ─ ─ ─ ─ ─ ─ ─ ─ ─ ─ ─ ─ ─ ─ ─ ─ ─ ─ ─ ─ ─│─ ─ ─ ┐
│ AS security is  │                                       │      │
│   activated     │      RRC: RRCRelease message          │      │
│                 │◄──────────────────────────────────────│      │
│         ┌───────┴─────────────────────────────┐         │      │
│         │ 1) If noLastCellUpdate is not        │         │      │
│         │ included, a last used cell is updated│         │      │
│         │ to a current cell                    │         │      │
│         │ 2) If noLastCellUpdate is included,  │         │      │
│         │ a last used cell is not updated      │         │      │
│         └───────┬─────────────────────────────┘         │      │
└ ─ ─ ─ ─ ─ ─ ─ ─ │─ ─ ─ ─ ─ ─ ─ ─ ─ ─ ─ ─ ─ ─ ─ ─ ─ ─ ─ │─ ─ ─ ┘
┌ ─ ─ ─ ─ ─ ─ ─ ─ │─ ─ ─ ─ ─ ─ ─ ─ ─ ─ ─ ─ ─ ─ ─ ─ ─ ─ ─ │─ ─ ─ ┐
│ AS security is  │                                       │      │
│  not activated  │      RRC: RRCRelease message          │      │
│                 │◄──────────────────────────────────────│      │
│         ┌───────┴─────────────────────────────┐         │      │
│         │ Do not ignore noLastCellUpdate       │         │      │
│         │ 1) If noLastCellUpdate is not        │         │      │
│         │ included, a last used cell is updated│         │      │
│         │ to a current cell                    │         │      │
│         │ 2) If noLastCellUpdate is included,  │         │      │
│         │ a last used cell is not updated      │         │      │
│         └───────┬─────────────────────────────┘         │      │
└ ─ ─ ─ ─ ─ ─ ─ ─ │─ ─ ─ ─ ─ ─ ─ ─ ─ ─ ─ ─ ─ ─ ─ ─ ─ ─ ─ │─ ─ ─ ┘
         │                                                │
```

**FIG. 8**

```
                           ┌── 900
┌─────────────────────────────────────────────────────┐
│             Communication apparatus                  │
│                                                       │
│         ┌── 901                  ┌── 902              │
│   ┌──────────────┐         ┌──────────────┐          │
│   │  Processing  │         │ Transceiver  │          │
│   │    unit      │         │    unit      │          │
│   └──────────────┘         └──────────────┘          │
└─────────────────────────────────────────────────────┘
```

**FIG. 9**

1000

Communication apparatus

1001

Logic circuit

1002

Input/Output interface

FIG. 10

1100

Communication apparatus

1102

Communication port

1101

Processor

1104

1103

Memory

FIG. 11

FIG. 12

## INTERNATIONAL SEARCH REPORT

| International application No. |
|---|
| **PCT/CN2023/110144** |

| A. | CLASSIFICATION OF SUBJECT MATTER |
|---|---|

H04W 52/02(2009.01)i

According to International Patent Classification (IPC) or to both national classification and IPC

| B. | FIELDS SEARCHED |
|---|---|

Minimum documentation searched (classification system followed by classification symbols)

IPC: H04L H04Q H04W

Documentation searched other than minimum documentation to the extent that such documents are included in the fields searched

Electronic data base consulted during the international search (name of data base and, where practicable, search terms used)

CNTXT, ENTXTC, DWPI, 3GPP: 寻呼提前指示, PEI, 功耗, 耗电, 省电, 费电, 节约, 节省, 能耗, 耗能, 最后, 小区, 释放, RRC, 接入层, 等待时间, 更新, paging early indication, waste, save, energy, power, last, cell, RRC, release, access stratum, AS, wait+, time, updat+, renew

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | HUAWEI et al. "Discussion on the Update of Last Used Cell"<br>*3GPP TSG-RAN WG2 Meeting #120 R2-2211604*, 18 November 2022 (2022-11-18), sections 2-3 | 1-24 |
| A | HUAWEI. "Offline [AT111-e] [302] [NBIOT/eMTC R15] WUS Last Used Cell (Huawei)"<br>*3GPP TSG-RAN WG2 Meeting #111-e R2-2008302*, 28 August 2020 (2020-08-28), section 2.3 | 1-24 |
| A | CN 112788797 A (ASUSTEK COMPUTER INC.) 11 May 2021 (2021-05-11)<br>entire document | 1-24 |
| A | WO 2022141009 A1 (HUAWEI TECHNOLOGIES CO., LTD.) 07 July 2022 (2022-07-07)<br>entire document | 1-24 |
| A | WO 2022160315 A1 (HUAWEI TECHNOLOGIES CO., LTD.) 04 August 2022 (2022-08-04)<br>entire document | 1-24 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 October 2023** | **17 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/110144**

| C. | DOCUMENTS CONSIDERED TO BE RELEVANT | |
|---|---|---|
| Category* | Citation of document, with indication, where appropriate, of the relevant passages | Relevant to claim No. |
| A | MEDIATEK INC. "Report of [AT117-e] [004][ePowSav] PEI and Paging Subgrouping" *3GPP TSG-RAN WG2 Meeting #117 electronic, R2-2203901*, 03 March 2022 (2022-03-03), entire document | 1-24 |

Form PCT/ISA/210 (second sheet) (July 2022)

**INTERNATIONAL SEARCH REPORT**
Information on patent family members

International application No.

**PCT/CN2023/110144**

| Patent document cited in search report | | | Publication date (day/month/year) | Patent family member(s) | | | Publication date (day/month/year) |
|---|---|---|---|---|---|---|---|
| CN | 112788797 | A | 11 May 2021 | KR | 20210053789 | A | 12 May 2021 |
| | | | | EP | 3817506 | A1 | 05 May 2021 |
| | | | | US | 2021136855 | A1 | 06 May 2021 |
| | | | | JP | 2021072620 | A | 06 May 2021 |
| | | | | EP | 4199641 | A1 | 21 June 2023 |
| | | | | JP | 2022031846 | A | 22 February 2022 |
| | | | | US | 2021212149 | A1 | 08 July 2021 |
| | | | | TW | 202119856 | A | 16 May 2021 |
| WO | 2022141009 | A1 | 07 July 2022 | CN | 116438879 | A | 14 July 2023 |
| WO | 2022160315 | A1 | 04 August 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210957685